# EUROPEAN PATENT APPLICATION

(11) **EP 4 753 232 A1**
(43) Date of publication of application: **03.06.2026**
(21) Application number: 23948762.2
(22) Date of filing: 11.08.2023
(51) Int. Cl.: H04L 67/1042

(54) **COMMUNICATION METHODS AND APPARATUSES BASED ON SMART CONTRACT**

(71) Applicant: Huawei Technologies Co., Ltd., Shenzhen, Guangdong 518129 (CN)
(72) Inventor: WANG, Donghui, Shenzhen, Guangdong 518129 (CN); LIU, Fei, Shenzhen, Guangdong 518129 (CN); XIAO, Xun, Shenzhen, Guangdong 518129 (CN)
(74) Representative: Gill Jennings & Every LLP
(86) International application number: PCT/CN2023/112759
(87) International publication number: WO 2025/035327

(57) **Abstract**

This application provides a smart contract-based communication method and an apparatus, relating to the field of wireless communication. The method may be applied to a network resulting from the convergence of a blockchain network and a core network, to resolve a problem of how to perform communication between nodes based on a blockchain technology in the converged network. This application provides a plurality of smart contract-based communication methods, relating to a smart contract discovery process, a smart contract subscription process, a smart contract invocation process, and a smart contract authorization process. Therefore, according to the foregoing method, a smart contract can be discovered, a status of the smart contract can be subscribed to, the smart contract can be invoked, or the smart contract can be authorized. The smart contract has a network function of a core network.

## Description

### TECHNICAL FIELD

This application relates to the wireless communication field, and in particular, to a smart contract-based communication method and an apparatus.

### BACKGROUND

Blockchain (blockchain, BC) is a distributed ledger that integrates a plurality of technologies including cryptography, peer-to-peer (peer-to-peer, P2P) networking, and distributed-database technologies. As an open and transparent decentralization technology, blockchain transforms conventional authoritative centralization and centralized trust into collective consensus and decentralized trust respectively, and constructs a tamper-proof distributed ledger using the cryptography technology. In blockchain, data is generated and stored in blocks (block), and is connected into a chain (chain) data structure in chronological order.

Based on immutability of blockchain, the industry proposes the solution of introducing the blockchain technology into communication systems, to improve communication security between communication apparatuses in the communication systems. However, after the blockchain technology is combined with the communication system, how to perform communication between the communication apparatuses based on the blockchain technology is still an urgent problem to be resolved.

### SUMMARY

This application provides a smart contract-based communication method and an apparatus, which may be applied to a network resulting from the convergence of a blockchain network and a core network, to resolve a problem of how to perform communication between nodes based on a blockchain technology in the converged network.

To achieve the foregoing objective, the following technical solutions are used in this application.

According to a first aspect, a smart contract-based communication method is provided. The method may be performed by a first node; or may be performed by a module, for example, a chip, a chip system, or a circuit, used in the first node; or may be implemented by a logical node, a logical module, or software that can implement all or some functions of the first node. This is not limited. For ease of description, the following uses an example in which the first node performs the method for description. Optionally, the first node is a blockchain node. The method includes: obtaining first invocation information, and obtaining information about a second smart contract based on the first invocation information. The first invocation information is used to invoke a first smart contract, the first smart contract is used to discover the second smart contract, and the second smart contract has a network function of a core network.

Based on the method provided in the first aspect, the first node may discover the second smart contract by invoking the first smart contract, to obtain the information about the second smart contract. This helps learn of related information about the second smart contract, or helps invoke the second smart contract.

In a possible implementation, the obtaining the information about the second smart contract based on the first invocation information includes: executing the first smart contract to obtain the information about the second smart contract.

Based on the foregoing possible implementation, the first node is an execution node of the first smart contract, and may execute the first smart contract to obtain the information about the second smart contract.

In a possible implementation, the method further includes: sending an execution result of the first smart contract to a node on a first blockchain, where the first smart contract is deployed on the first blockchain.

Based on the foregoing possible implementation, the first node may add the execution result of the first smart contract to a chain, so that the execution result of the first smart contract may be recorded on the first blockchain in a form of transaction, to facilitate tracing. In addition, the node on the first blockchain may obtain the information about the second smart contract, to facilitate subsequent invocation of the second smart contract.

In a possible implementation, the obtaining the information about the second smart contract based on the first invocation information includes: sending second invocation information to an execution node of the first smart contract, where the second invocation information is determined based on the first invocation information; and receiving the information about the second smart contract.

Based on the foregoing possible implementation, the first node is not an execution node of the first smart contract, and may send, to the execution node of the first smart contract, the second invocation information used to invoke the first smart contract, so that the execution node of the first smart contract executes the first smart contract to obtain the information about the second smart contract, and then sends the information about the second smart contract to the first node.

In a possible implementation, the obtaining the information about the second smart contract based on the first invocation information includes: determining that the first smart contract and the second smart contract are located on different blockchains; sending first cross-chain invocation information, where the first cross-chain invocation information is used to invoke a third smart contract across chains, the third smart contract is used to discover the second smart contract, and the third smart contract and the second smart contract are located on a same blockchain; and receiving the information about the second smart contract.

Based on the foregoing possible implementation, when determining that the first smart contract and the second smart contract are located on different blockchains, the first node may invoke, across chains, the third smart contract that is located on the same blockchain as the second smart contract, so that the third smart contract discovers the second smart contract, so as to obtain the information about the second smart contract.

In a possible implementation, the method further includes: sending first indication information, where the first indication information indicates that the first smart contract and the second smart contract are located on different blockchains.

Based on the foregoing possible implementations, a node that receives the first indication information, for example, a second node, may determine that the first smart contract and the second smart contract are located on different blockchains.

In a possible implementation, the first invocation information includes at least one of the following: an identifier of the second smart contract, an identifier of a second blockchain, information about a first execution node, information about a first verification node, information about a first deployment node, or information about a first network function.

Based on the foregoing possible implementation, the first invocation information may include one or more types of the foregoing information, so that the first smart contract discovers the second smart contract that matches the one or more types of information in the invocation information.

In a possible implementation, the information about the second smart contract includes at least one of the following: an identifier of a blockchain on which the second smart contract is located or the identifier of the second smart contract.

Based on the foregoing possible implementation, the identifier of the blockchain on which the second smart contract is located and/or the identifier of the second smart contract may be obtained by executing the first smart contract. The identifier of the blockchain on which the second smart contract is located may be used to determine a specific blockchain on which the second smart contract is deployed, and the identifier of the second smart contract may indicate the second smart contract. Therefore, the second smart contract can be conveniently invoked subsequently based on the foregoing information.

In a possible implementation, the information about the second smart contract further includes at least one of the following: information about a verification node of the second smart contract, information about an execution node of the second smart contract, information about a deployment node of the second smart contract, key information of the second smart contract, token access manner information of the second smart contract, version identification information of the second smart contract, an input parameter of the network function of the second smart contract, or information about the network function of the second smart contract.

Based on the foregoing possible implementation, the information about the second smart contract may further include one or more of the foregoing information. The information about the verification node of the second smart contract may be used to determine the verification node of the second smart contract, so that the first node determines specific verification nodes of the second smart contract. The information about the execution node of the second smart contract may be used to determine the execution node for executing the second smart contract, so that the first node determines specific execution nodes on which the second smart contract is deployed, and may subsequently invoke the second smart contract on these execution nodes. The information about the deployment node of the second smart contract may be used to determine the node on which the second smart contract is deployed, so that the first node determines specific nodes on which the second smart contract is deployed, and may subsequently query related information about the first smart contract on these nodes. The key information of the second smart contract may include a public key, a public key certificate, a private key, and the like of the second smart contract, and be used to carry the information when the first node invokes the second smart contract, so that the execution node of the second smart contract determines whether the first node is valid (for example, whether the first node can invoke the second smart contract), to improve communication security. The token access manner information of the second smart contract may be used to determine a token access manner of the second smart contract, for example, identifiers of smart contracts that can be accessed by the second smart contract, and/or validity periods of smart contracts that can be accessed by the second smart contract, to subsequently invoke these smart contracts. The version identification information of the second smart contract may be used to determine a version of the second smart contract, so that the first node determines a version of the second smart contract to be invoked. The input parameter of the network function of the second smart contract may be used to determine the input parameter of the network function corresponding to the first smart contract, so that the first node provides a corresponding parameter when invoking the second smart contract. The information about the network function of the second smart contract may be used to determine the network function corresponding to the second smart contract, so that the first node determines the network function provided by the second smart contract.

In a possible implementation, the method further includes: sending the information about the second smart contract.

Based on the foregoing possible implementation, a node that receives the information about the second smart contract, for example, a second node, may invoke the second smart contract based on the information.

In a possible implementation, the network function of the core network is configured to provide at least one of the following services: a subscription service, an authentication service, a registration service, a mobility management service, a policy management service, a data processing service, a charging service, a session management service, a computing service, a sensing service, or an artificial intelligence (artificial intelligence, AI) service.

Based on the foregoing possible implementation, one or more of a plurality of services that can be provided by the network function of the core network may be deployed on the blockchain in a form of smart contract, to implement convergence of a blockchain network and the core network, and improve communication security.

In a possible implementation, the network function of the core network includes at least one of the following: an access function, a mobility management function, a network repository function, unified data management, an authentication server function, a session management function, a user plane function, a policy control function, a network exposure function, a computing plane function, a data plane function, or a smart plane function.

Based on the foregoing possible implementation, one or more of the foregoing network functions may be deployed on a blockchain in a form of smart contract, to implement convergence of a blockchain network and the core network, and improve communication security.

According to a second aspect, a smart contract-based communication method is provided. The method may be performed by a second node; or may be performed by a module, for example, a chip, a chip system, or a circuit, used in the second node; or may be implemented by a logical node, a logical module, or software that can implement all or some functions of the second node. This is not limited. For ease of description, the following uses an example in which the second node performs the method for description. Optionally, the second node is an apparatus that has a communication capability and a computational capability, or the second node is a blockchain node. The method includes: sending first invocation information, and receiving information about a second smart contract. The first invocation information is used to invoke a first smart contract, the first smart contract is used to discover the second smart contract, and the second smart contract has a network function of a core network.

Based on the method provided in the second aspect, the second node may initiate invocation of the first smart contract, and discover the second smart contract by using the first smart contract, to obtain the information about the second smart contract. This helps learn of related information about the second smart contract, or helps invoke the second smart contract.

In a possible implementation, the first invocation information includes at least one of the following: an identifier of the second smart contract, an identifier of a second blockchain, information about a first execution node, information about a first verification node, information about a first deployment node, or information about a first network function.

In a possible implementation, the information about the second smart contract includes at least one of the following: an identifier of a blockchain on which the second smart contract is located or the identifier of the second smart contract.

In a possible implementation, the information about the second smart contract further includes at least one of the following: information about a verification node of the second smart contract, information about an execution node of the second smart contract, information about a deployment node of the second smart contract, key information of the second smart contract, token access manner information of the second smart contract, version identification information of the second smart contract, an input parameter of the network function of the second smart contract, or information about the network function of the second smart contract.

In a possible implementation, the method further includes: receiving first indication information, where the first indication information indicates that the first smart contract and the second smart contract are located on different blockchains; and sending second cross-chain invocation information, where the second cross-chain invocation information is used to invoke a third smart contract across chains, the third smart contract is used to discover the second smart contract, and the third smart contract and the second smart contract are located on a same blockchain.

Based on the foregoing possible implementation, the second node may determine, according to the indication, that the first smart contract and the second smart contract are located on different blockchains, and then initiate a cross-chain invocation request, to invoke, across chains, the third smart contract that is located on the same blockchain as the second smart contract, so that the third smart contract discovers the second smart contract, so as to obtain the information about the second smart contract.

In a possible implementation, the first indication information includes information about the third smart contract.

Based on the foregoing possible implementation, the second node may determine to invoke the third smart contract across chains, to discover the second smart contract by using the third smart contract.

In a possible implementation, the network function of the core network is configured to provide at least one of the following services: a subscription service, an authentication service, a registration service, a mobility management service, a policy management service, a data processing service, a charging service, a session management service, a computing service, a sensing service, or an artificial intelligence service.

In a possible implementation, the network function of the core network includes at least one of the following: an access function, a mobility management function, a network repository function, unified data management, an authentication server function, a session management function, a user plane function, a policy control function, a network exposure function, a computing plane function, a data plane function, or a smart plane function.

It may be understood that for technical effects brought by any possible implementation of the second aspect, refer to technical effects brought by different possible implementations of the first aspect. Details are not described herein again.

According to a third aspect, a smart contract-based communication method is provided. The method may be performed by a deployment node of a fifth smart contract; or may be performed by a module, for example, a chip, a chip system, or a circuit, used in the deployment node of the fifth smart contract; or may be implemented by a logical node, a logical module, or software that can implement all or some functions of the deployment node of the fifth smart contract. This is not limited. For ease of description, the following uses an example in which the deployment node of the fifth smart contract performs the method for description. The deployment node of the fifth smart contract may be replaced with an execution node of the fifth smart contract or a verification node of the fifth smart contract. The method includes: The deployment node of the fifth smart contract monitors a first subscription event; and the deployment node of the fifth smart contract obtains status information of a fourth smart contract when the first subscription event is triggered, where at least one of the fourth smart contract or the fifth smart contract has a network function of a core network.

Based on the method provided in the third aspect, when the first subscription event is triggered, the deployment node of the fifth smart contract may obtain the status information of the fourth smart contract to which the fifth smart contract subscribes, to obtain a latest status of the fourth smart contract, so as to facilitate subsequent invocation.

In a possible implementation, the method further includes: The deployment node of the fifth smart contract sets the first subscription event.

Based on the foregoing possible implementation, the first subscription event may be set in the deployment node of the fifth smart contract, to subscribe to the status information of the fourth smart contract.

In a possible implementation, a trigger condition of the first subscription event includes: The fourth smart contract is updated, the fourth smart contract is canceled, the fourth smart contract is activated, or the fourth smart contract expires.

Based on the foregoing possible implementation, the deployment node of the fifth smart contract may obtain the status information of the fourth smart contract when the fourth smart contract is updated, the fourth smart contract is canceled, the fourth smart contract is activated, or the fourth smart contract expires.

In a possible implementation, the network function of the core network is configured to provide at least one of the following services: a subscription service, an authentication service, a registration service, a mobility management service, a policy management service, a data processing service, a charging service, a session management service, a computing service, a sensing service, or an artificial intelligence service.

Based on the foregoing possible implementation, one or more of a plurality of services that can be provided by the network function of the core network may be deployed on the blockchain in a form of smart contract, to implement convergence of a blockchain network and the core network, and improve communication security.

In a possible implementation, the network function of the core network includes at least one of the following: an access function, a mobility management function, a network repository function, unified data management, an authentication server function, a session management function, a user plane function, a policy control function, a network exposure function, a computing plane function, a data plane function, or a smart plane function.

According to a fourth aspect, a smart contract-based communication method is provided. The method may be performed by a deployment node of a fourth smart contract; or may be performed by a module, for example, a chip, a chip system, or a circuit, used in the deployment node of the fourth smart contract; or may be implemented by a logical node, a logical module, or software that can implement all or some functions of the deployment node of the fourth smart contract. This is not limited. For ease of description, the following uses an example in which the deployment node of the fourth smart contract performs the method for description. The deployment node of the fourth smart contract may be replaced with an execution node of the fourth smart contract or a verification node of the fourth smart contract. The method includes: The deployment node of the fourth smart contract monitors a second subscription event; and the deployment node of the fourth smart contract sends status information of the fourth smart contract to a deployment node of a fifth smart contract when the second subscription event is triggered, where the fifth smart contract subscribes to the fourth smart contract, and at least one of the fourth smart contract or the fifth smart contract has a network function of a core network.

Based on the method provided in the fourth aspect, the deployment node of the fourth smart contract may send the status information of the fourth smart contract to the deployment node of the fifth smart contract when the second subscription event is triggered, so that the deployment node of the fifth smart contract obtains a latest status of the fourth smart contract, to facilitate subsequent invocation.

In a possible implementation, the method further includes: The deployment node of the fourth smart contract sets the second subscription event.

Based on the foregoing possible implementation, the second subscription event may be set in the deployment node of the fourth smart contract, so that the fifth smart contract subscribes to the status of the fourth smart contract.

In a possible implementation, a trigger condition of the second subscription event includes: The fourth smart contract is updated, the fourth smart contract is canceled, the fourth smart contract is activated, or the fourth smart contract expires.

Based on the foregoing possible implementation, the deployment node of the fourth smart contract may send the status information of the fourth smart contract to the deployment node of the fifth smart contract when the fourth smart contract is updated, the fourth smart contract is canceled, the fourth smart contract is activated, or the fourth smart contract expires, so that the deployment node of the fifth smart contract obtains a latest status of the fourth smart contract, to facilitate subsequent invocation.

In a possible implementation, the network function of the core network is configured to provide at least one of the following services: a subscription service, an authentication service, a registration service, a mobility management service, a policy management service, a data processing service, a charging service, a session management service, a computing service, a sensing service, or an artificial intelligence service.

Based on the foregoing possible implementation, one or more of a plurality of services that can be provided by the network function of the core network may be deployed on the blockchain in a form of smart contract, to implement convergence of a blockchain network and the core network, and improve communication security.

In a possible implementation, the network function of the core network includes at least one of the following: an access function, a mobility management function, a network repository function, unified data management, an authentication server function, a session management function, a user plane function, a policy control function, a network exposure function, a computing plane function, a data plane function, or a smart plane function.

According to a fifth aspect, a smart contract-based communication method is provided. The method may be performed by an execution node of a sixth smart contract; or may be performed by a module, for example, a chip, a chip system, or a circuit, used in the execution node of the sixth smart contract; or may be implemented by a logical node, a logical module, or software that can implement all or some functions of the execution node of the sixth smart contract. This is not limited. For ease of description, the following uses an example in which the execution node of the sixth smart contract performs the method for description. The method includes: The execution node of the sixth smart contract determines third invocation information, and sends the third invocation information. The third invocation information is used to invoke a seventh smart contract, the third invocation information includes first information, the first information is used to obtain access permission for the sixth smart contract to access the seventh smart contract, and at least one of the sixth smart contract or the seventh smart contract has a network function of a core network.

Based on the method provided in the fifth aspect, when the execution node of the sixth smart contract invokes the seventh smart contract, the first information may be carried, so that an execution node of the seventh smart contract obtains, based on the first information, the access permission for the sixth smart contract to access the seventh smart contract, and then determines whether the sixth smart contract has the access permission, to improve communication security.

In a possible implementation, the first information includes access permission information for the sixth smart contract to access the seventh smart contract; or the first information includes an identifier of a third blockchain, and access permission information for the sixth smart contract to access the seventh smart contract is stored in a node on the third blockchain.

Based on the foregoing possible implementation, when the execution node of the sixth smart contract invokes the seventh smart contract, the access permission information for the sixth smart contract to access the seventh smart contract may be directly carried, so that an execution node of the seventh smart contract determines, based on the access permission information, whether the sixth smart contract has the access permission. This is very convenient. Alternatively, when the execution node of the sixth smart contract invokes the seventh smart contract, the identifier of the third blockchain may be carried, so that an execution node of the seventh smart contract obtains, from the third blockchain, the access permission for the sixth smart contract to access the seventh smart contract, and then determines whether the sixth smart contract has the access permission. In this scenario, signaling overheads of the third invocation information are relatively low. Therefore, the foregoing possible implementation is applicable to different smart contract invocation scenarios.

In a possible implementation, the access permission information includes at least one of the following: a validity time for the sixth smart contract to access the seventh smart contract, or access scope information for the sixth smart contract to access the seventh smart contract.

Based on the foregoing possible implementation, an execution node of the seventh smart contract may determine, based on the validity time and/or the access scope information, whether the sixth smart contract has the access permission.

In a possible implementation, the method further includes: The execution node of the sixth smart contract sends fourth invocation information, where the fourth invocation information is used to invoke an eighth smart contract, and the eighth smart contract is used to determine the access permission for the sixth smart contract to access the seventh smart contract; and the execution node of the sixth smart contract receives the first information.

Based on the foregoing possible implementation, the access permission for the sixth smart contract to access the seventh smart contract may be obtained by invoking the eighth smart contract.

In a possible implementation, the fourth invocation information includes an identifier of the sixth smart contract and an identifier of the seventh smart contract.

Based on the foregoing possible implementation, the fourth invocation information may include the identifier of the sixth smart contract and the identifier of the seventh smart contract. The identifier of the sixth smart contract may be used by an execution node of the eighth smart contract to determine a smart contract that requests authorization. The identifier of the seventh smart contract may be used by the execution node of the eighth smart contract to determine a smart contract that is requested to be accessed.

In a possible implementation, the fourth invocation information further includes at least one of the following: an identifier of a blockchain on which the sixth smart contract is located, information about a home location of the sixth smart contract, information about an access location of the sixth smart contract, or an identifier of a blockchain on which the seventh smart contract is located.

Based on the foregoing possible implementation, the fourth invocation information may further include one or more of the foregoing information. The identifier of the blockchain on which the sixth smart contract is located may be used by the execution node of the eighth smart contract to determine the blockchain on which the sixth smart contract is located, and then determine, based on the blockchain, whether to authorize the sixth smart contract to access the seventh smart contract. The information about the home location of the sixth smart contract is used by the execution node of the eighth smart contract to determine the home location of the sixth smart contract, and then determine, with reference to the home location, whether to authorize the sixth smart contract to access the seventh smart contract. The information about the access location of the sixth smart contract is used by the execution node of the eighth smart contract to determine the access location of the sixth smart contract, and then determine, with reference to the access location, whether to authorize the sixth smart contract to access the seventh smart contract. The identifier of the blockchain on which the seventh smart contract is located is used by the execution node of the eighth smart contract to determine the blockchain on which the seventh smart contract is located, and then determine, based on the blockchain, whether to authorize the sixth smart contract to access the seventh smart contract. In conclusion, the execution node of the eighth smart contract may determine, based on a plurality of types of information, whether to authorize the sixth smart contract to access the seventh smart contract, to adapt to various scenarios.

In a possible implementation, the method further includes: The execution node of the sixth smart contract sends a first request, where the first request is used to request the access permission for the sixth smart contract to access the seventh smart contract; and the execution node of the sixth smart contract receives the first information.

Based on the foregoing possible implementation, the execution node of the sixth smart contract may directly request, from another node, for example, a node that has a function of determining permission for one smart contract to access another smart contract, the access permission for the sixth smart contract to access the seventh smart contract. This implementation is applicable to a scenario in which no smart contract having a function of determining smart contract access permission is deployed.

In a possible implementation, the network function of the core network is configured to provide at least one of the following services: a subscription service, an authentication service, a registration service, a mobility management service, a policy management service, a data processing service, a charging service, a session management service, a computing service, a sensing service, or an artificial intelligence service.

Based on the foregoing possible implementation, one or more of a plurality of services that can be provided by the network function of the core network may be deployed on the blockchain in a form of smart contract, to implement convergence of a blockchain network and the core network, and improve communication security.

In a possible implementation, the network function of the core network includes at least one of the following: an access function, a mobility management function, a network repository function, unified data management, an authentication server function, a session management function, a user plane function, a policy control function, a network exposure function, a computing plane function, a data plane function, or a smart plane function.

According to a sixth aspect, a smart contract-based communication method is provided. The method may be performed by an execution node of an eighth smart contract; or may be performed by a module, for example, a chip, a chip system, or a circuit, used in the execution node of the eighth smart contract; or may be implemented by a logical node, a logical module, or software that can implement all or some functions of the execution node of the eighth smart contract. This is not limited. For ease of description, the following uses an example in which the execution node of the eighth smart contract performs the method for description. The method includes: receiving fourth invocation information used to invoke the eighth smart contract; executing the eighth smart contract to obtain access permission information for a sixth smart contract to access a seventh smart contract; and sending first information. At least one of the sixth smart contract, the seventh smart contract, or the eighth smart contract has a network function of a core network, and the first information is used to obtain access permission for the sixth smart contract to access the seventh smart contract.

Based on the method provided in the sixth aspect, the execution node of the eighth smart contract may execute the eighth smart contract to obtain the permission for the sixth smart contract to access the seventh smart contract, so that the sixth smart contract subsequently invokes the seventh smart contract.

In a possible implementation, the first information includes the access permission information; or the first information includes an identifier of a third blockchain, and the access permission information is stored in a node on the third blockchain.

Based on the foregoing possible implementation, a node that receives the first information, for example, an execution node of the sixth smart contract, can directly obtain the access permission information for the sixth smart contract to access the seventh smart contract. This is very convenient. Alternatively, the identifier of the third blockchain is directly obtained, and the access permission for the sixth smart contract to access the seventh smart contract is obtained from the third blockchain based on the identifier of the third blockchain. In this scenario, signaling overheads are relatively low. Therefore, the foregoing possible implementation is applicable to different smart contract authorization scenarios.

In a possible implementation, the access permission information includes at least one of the following: a validity time for the sixth smart contract to access the seventh smart contract, or access scope information for the sixth smart contract to access the seventh smart contract.

Based on the foregoing possible implementation, the permission for the sixth smart contract to access the seventh smart contract may be limited from the validity time and/or an access scope.

In a possible implementation, the method further includes: sending an execution result of the eighth smart contract to a node on a blockchain on which the eighth smart contract is located.

Based on the foregoing possible implementation, the execution node of the eighth smart contract may add the execution result of the eighth smart contract to a chain, so that the execution result of the eighth smart contract may be recorded on the blockchain in a form of transaction, to facilitate tracing.

In a possible implementation, the network function of the core network is configured to provide at least one of the following services: a subscription service, an authentication service, a registration service, a mobility management service, a policy management service, a data processing service, a charging service, a session management service, a computing service, a sensing service, or an artificial intelligence service.

Based on the foregoing possible implementation, one or more of a plurality of services that can be provided by the network function of the core network may be deployed on the blockchain in a form of smart contract, to implement convergence of a blockchain network and the core network, and improve communication security.

In a possible implementation, the network function of the core network includes at least one of the following: an access function, a mobility management function, a network repository function, unified data management, an authentication server function, a session management function, a user plane function, a policy control function, a network exposure function, a computing plane function, a data plane function, or a smart plane function.

According to a seventh aspect, a smart contract-based communication method is provided. The method may be performed by an execution node of a seventh smart contract; or may be performed by a module, for example, a chip, a chip system, or a circuit, used in the execution node of the seventh smart contract; or may be implemented by a logical node, a logical module, or software that can implement all or some functions of the execution node of the seventh smart contract. This is not limited. For ease of description, the following uses an example in which the execution node of the seventh smart contract performs the method for description. The method includes: The execution node of the seventh smart contract receives third invocation information, and determines, based on the third invocation information, whether to execute the seventh smart contract. The third invocation information is used to invoke the seventh smart contract, the third invocation information includes first information, the first information is used to obtain access permission for a sixth smart contract to access the seventh smart contract, and at least one of the sixth smart contract or the seventh smart contract has a network function of a core network.

Based on the method provided in the seventh aspect, when the seventh smart contract is invoked by the sixth smart contract, the execution node of the seventh smart contract may determine whether the sixth smart contract has the access permission, to improve communication security.

In a possible implementation, the first information includes access permission information for the sixth smart contract to access the seventh smart contract; or the first information includes an identifier of a third blockchain, and access permission information for the sixth smart contract to access the seventh smart contract is stored in the third blockchain.

Based on the foregoing possible implementation, when the sixth smart contract invokes the seventh smart contract, the access permission information for the sixth smart contract to access the seventh smart contract may be directly carried, so that an execution node of the seventh smart contract determines, based on the access permission information, whether the sixth smart contract has the access permission. This is very convenient. Alternatively, when the sixth smart contract invokes the seventh smart contract, the identifier of the third blockchain may be carried, so that an execution node of the seventh smart contract obtains, from the third blockchain, the access permission for the sixth smart contract to access the seventh smart contract, and then determines whether the sixth smart contract has the access permission. In this scenario, signaling overheads of the third invocation information are relatively low. Therefore, the foregoing possible implementation is applicable to different smart contract invocation scenarios.

In a possible implementation, the first information includes the access permission information for the sixth smart contract to access the seventh smart contract; and that the execution node of the seventh smart contract determines, based on the third invocation information, whether to execute the seventh smart contract includes: The execution node of the seventh smart contract determines, based on the access permission information, whether to execute the seventh smart contract.

Based on the foregoing possible implementation, when the sixth smart contract invokes the seventh smart contract, and the access permission information for the sixth smart contract to access the seventh smart contract is directly carried, the execution node of the seventh smart contract may determine, based on the access permission information, whether to execute the seventh smart contract. This is very convenient.

In a possible implementation, the first information includes the identifier of the third blockchain; and that the execution node of the seventh smart contract determines, based on the third invocation information, whether to execute the seventh smart contract includes: The execution node of the seventh smart contract sends query information to a node on the third blockchain, where the query information is used to query the access permission for the sixth smart contract to access the seventh smart contract; the execution node of the seventh smart contract receives a query result; and the execution node of the seventh smart contract determines, based on the query result, whether to execute the seventh smart contract.

Based on the foregoing possible implementation, when the sixth smart contract invokes the seventh smart contract, and the identifier of the third blockchain is directly carried, the execution node of the seventh smart contract may obtain, from the third blockchain, the access permission information for the sixth smart contract to access the seventh smart contract, and then determine, based on the access permission information, whether to execute the seventh smart contract. In this possible implementation, signaling overheads of the third invocation information are relatively low.

In a possible implementation, the network function of the core network is configured to provide at least one of the following services: a subscription service, an authentication service, a registration service, a mobility management service, a policy management service, a data processing service, a charging service, a session management service, a computing service, a sensing service, or an artificial intelligence service.

Based on the foregoing possible implementation, one or more of a plurality of services that can be provided by the network function of the core network may be deployed on the blockchain in a form of smart contract, to implement convergence of a blockchain network and the core network, and improve communication security.

In a possible implementation, the network function of the core network includes at least one of the following: an access function, a mobility management function, a network repository function, unified data management, an authentication server function, a session management function, a user plane function, a policy control function, a network exposure function, a computing plane function, a data plane function, or a smart plane function.

According to an eighth aspect, a communication apparatus is provided to implement the foregoing method. The communication apparatus may be the first node in the first aspect, or an apparatus including the first node, or a module, for example, a chip, a chip system, or a circuit, in the first node in the first aspect, or a logical node, a logical module, or a software implementation that can implement some or all functions of the first node. Alternatively, the communication apparatus may be the second node in the second aspect, or an apparatus including the second node, or a module, for example, a chip, a chip system, or a circuit, in the second node in the second aspect, or a logical node, a logical module, or a software implementation that can implement some or all functions of the second node. Alternatively, the communication apparatus may be the deployment node of the fifth smart contract in the third aspect, or an apparatus including the deployment node of the fifth smart contract, or a module, for example, a chip, a chip system, or a circuit, in the deployment node of the fifth smart contract in the third aspect, or a logical node, a logical module, or a software implementation that can implement some or all functions of the deployment node of the fifth smart contract. Alternatively, the communication apparatus may be the deployment node of the fourth smart contract in the fourth aspect, or an apparatus including the deployment node of the fourth smart contract, or a module, for example, a chip, a chip system, or a circuit, in the deployment node of the fourth smart contract in the fourth aspect, or a logical node, a logical module, or a software implementation that can implement some or all functions of the deployment node of the fourth smart contract. Alternatively, the communication apparatus may be the execution node of the sixth smart contract in the fifth aspect, or an apparatus including the execution node of the sixth smart contract, or a module, for example, a chip, a chip system, or a circuit, in the execution node of the sixth smart contract in the fifth aspect, or a logical node, a logical module, or a software implementation that can implement some or all functions of the execution node of the sixth smart contract. Alternatively, the communication apparatus may be the execution node of the eighth smart contract in the sixth aspect, or an apparatus including the execution node of the eighth smart contract, or a module, for example, a chip, a chip system, or a circuit, in the execution node of the eighth smart contract in the sixth aspect, or a logical node, a logical module, or a software implementation that can implement some or all functions of the execution node of the eighth smart contract. Alternatively, the communication apparatus may be the execution node of the seventh smart contract in the seventh aspect, or an apparatus including the execution node of the seventh smart contract, or a module, for example, a chip, a chip system, or a circuit, in the execution node of the seventh smart contract in the seventh aspect, or a logical node, a logical module, or a software implementation that can implement some or all functions of the execution node of the seventh smart contract. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the eighth aspect, in a possible implementation, the communication apparatus may include a processing module. The processing module may be configured to implement a processing function in any one of the foregoing aspects and any possible implementation of the foregoing aspects. The processing module may be, for example, a processor.

With reference to the eighth aspect, in a possible implementation, the communication apparatus may include an interface module. The interface module may also be referred to as an interface unit, and is configured to implement a sending function and/or a receiving function in any one of the foregoing aspects and any possible implementation of the foregoing aspects. The interface module may include an interface circuit, a transceiver machine, a transceiver, or a communication interface.

With reference to the eighth aspect, in a possible implementation, the interface module includes a sending module and a receiving module, respectively configured to implement the sending function and the receiving function in any one of the foregoing aspects and any possible implementation of the foregoing aspects.

According to a ninth aspect, a communication apparatus is provided, including a processor. The processor is configured to: be coupled to a memory, and after reading instructions in the memory, perform the method in any one of the foregoing aspects according to the instructions.

With reference to the ninth aspect, in a possible implementation, the communication apparatus further includes the memory. The memory is configured to store program instructions and data. Optionally, the memory and the processor are integrated together, or the memory is independent of the processor.

With reference to the ninth aspect, in a possible implementation, the communication apparatus is a chip or a chip system. Optionally, when the communication apparatus is the chip system, the communication apparatus may include a chip, or may include a chip and another discrete component.

According to a tenth aspect, a communication apparatus is provided, including a processor and an interface circuit. The interface circuit is configured to input and/or output signaling or data; and the processor is configured to enable, by using a logic circuit and/or executing a computer program or instructions, the communication apparatus to perform the method in any one of the foregoing aspects.

With reference to the tenth aspect, in a possible implementation, the communication apparatus is a chip or a chip system. Optionally, when the communication apparatus is the chip system, the communication apparatus may include a chip, or may include a chip and another discrete component.

According to an eleventh aspect, a computer-readable storage medium is provided. The computer-readable storage medium stores instructions. When the instructions are run on a computer, the computer is enabled to perform the method in any one of the foregoing aspects.

According to a twelfth aspect, a computer program product including instructions is provided. When the computer program product runs on a computer, the computer is enabled to perform the method in any one of the foregoing aspects.

According to a thirteenth aspect, a communication system is provided. The communication system includes a first node configured to perform the method according to the first aspect, and a second node configured to perform the method according to the second aspect.

According to a fourteenth aspect, a communication system is provided. The communication system includes an execution node of a sixth smart contract configured to perform the method in the fifth aspect and an execution node of a seventh smart contract configured to perform the method in the seventh aspect.

With reference to the fourteenth aspect, in a possible implementation, the communication system further includes an execution node of an eighth smart contract configured to perform the method in the sixth aspect.

For technical effects brought by any one of the possible implementations in the eighth aspect to the fourteenth aspect, refer to the technical effects brought by any one of the first aspect to the seventh aspect or different possible implementations in any aspect. Details are not described herein again.

It may be understood that the solutions in the foregoing aspects may be combined if the solutions are not contradictory.

### BRIEF DESCRIPTION OF DRAWINGS

FIG. 1 is a diagram of an architecture of a core network;
FIG. 2 is a diagram in which a network function of a core network and/or a service function provided by the core network are/is deployed in a blockchain in a form of smart contract according to this application;
FIG. 3A is a diagram 1 of an architecture of a decentralized core network according to this application;
FIG. 3B is a diagram 2 of an architecture of a decentralized core network according to this application;
FIG. 3C is a diagram 3 of an architecture of a decentralized core network according to this application;
FIG. 4 is a diagram of a smart contract according to this application;
FIG. 5 is a diagram of a deployment manner of a smart contract having a network function according to this application;
FIG. 6 is a diagram of an architecture of a communication system according to this application;
FIG. 7 is a diagram of a hardware structure of a communication apparatus according to this application;
FIG. 8 is a schematic flowchart 1 of a smart contract-based communication method according to this application;
FIG. 9 is a schematic flowchart 2 of a smart contract-based communication method according to this application;
FIG. 10 is a schematic flowchart 3 of a smart contract-based communication method according to this application;
FIG. 11 is a schematic flowchart 4 of a smart contract-based communication method according to this application;
FIG. 12 is a schematic flowchart 5 of a smart contract-based communication method according to this application;
FIG. 13 is a schematic flowchart 6 of a smart contract-based communication method according to this application; and
FIG. 14 is a diagram of a structure of a communication apparatus according to this application.

### DESCRIPTION OF EMBODIMENTS

Before technical solutions of this application are described, related technical terms in this application are described. It may be understood that the descriptions are intended to make this application easier to understand, but should not be construed as a limitation on the protection scope claimed in this application.

### 1. Blockchain

In this application, the blockchain may also be referred to as a distributed ledger. Data may be generated and stored in blocks (or block-like), and connected into a chain (or chain-like) data structure in chronological order, and it is ensured in a cryptography manner that the data cannot be tampered with and cannot be forged. Any blockchain may be run (or deployed) on a plurality of blockchain nodes. In other words, one blockchain may be maintained by a plurality of blockchain nodes. For example, the plurality of blockchain nodes may share a ledger, and participate in operations such as transaction (transaction) on the blockchain and storage, verification, and forwarding of a block on the blockchain. When there is a newly created block in the blockchain, the block requires consensus confirmation from the plurality of blockchain nodes, and is broadcast in the blockchain to implement data synchronization between the blockchain nodes. Then, the block cannot be changed or deleted. Therefore, the blockchain has tamper-proofing.

In this application, the blockchain node may be understood as a physical node (for example, a service node of a server, a cloud, or a data center) or a virtual node deployed on a physical node. If the blockchain node is a virtual node deployed on a physical node, a plurality of blockchain nodes that maintain one blockchain may be deployed on a same physical node or different physical nodes. For example, if a blockchain node 1 to a blockchain node n jointly maintain a blockchain A, the blockchain node 1 to the blockchain node n are all deployed on a server 1, or some blockchain nodes in the blockchain node 1 to the blockchain node n are deployed on a server 1, and the other blockchain nodes in the blockchain node 1 to the blockchain node n are deployed on a server 2.

It may be understood that a plurality of blockchains may form a blockchain network. In the blockchain network, each blockchain may be maintained by a plurality of blockchain nodes. Any blockchain node may maintain one or more blockchains. For example, the blockchain network includes a blockchain A and a blockchain B, a blockchain node 1 to a blockchain node 5 maintain the blockchain A, and a blockchain node 4 to a blockchain node 10 maintain the blockchain B. In other words, the blockchain node 1 to a blockchain node 3 maintain one blockchain (the blockchain A), and a blockchain node 6 to the blockchain node 10 maintain one blockchain (the blockchain B). The blockchain node 4 and the blockchain node 5 maintain two blockchains (the blockchain A and the blockchain B).

### 2. Smart contract (smart contract, SC)

Tamper-proofing, a consensus feature, a distributed feature, and the like of a blockchain spawn development of SC technologies. The SC is a computer protocol that can be deployed on a blockchain to propagate, verify, or execute a contract in an informatization manner. A corresponding operation can be performed by declaring service logic in the SC. The SC allows trusted transactions to be performed without a third party. These transactions are traceable and irreversible. Specifically, the SC is service logic that can be installed and run in a blockchain node, and is a segment of executable code. The executable code may be deployed at an account address on a blockchain by using a feature of the blockchain. When an invocation transaction is initiated to the address, the invocation transaction is verified in a blockchain network under the constraint of a consensus mechanism, and program code that is correspondingly invoked is executed, to ensure certainty and uniqueness of an execution result.

It may be understood that the blockchain has a decentralization feature, so that program code constructed based on the SC can become a decentralized application (decentralized application, DAPP). Emergence of the DAPP changes an architecture of an internet application, so that deployment of the application gradually changes from centralization and a single service provider to a decentralized and distributed deployment and execution manner. Currently, there are already internet applications of several decentralized versions.

### 3. Terminal

In this application, the terminal is a device having wireless receiving and sending functions. The terminal may be deployed on land, and include an indoor terminal, an outdoor terminal, a handheld terminal, or an in-vehicle terminal; or may be deployed on a water surface (for example, on a ship); or may be deployed in the air (for example, on an aircraft, a balloon, or a satellite). The terminal may also be referred to as a terminal device. The terminal device may be user equipment (user equipment, UE), a mobile station (mobile station, MS), a mobile terminal (mobile terminal, MT), or the like, or may be a device configured to provide voice or data connectivity for a user. The UE includes a handheld device with a wireless communication function, a vehicle-mounted device (for example, on an automobile, a bicycle, an electric vehicle, an airplane, a ship, a train, or a high-speed train), a wearable device (for example, a smartwatch, a smart band, or a pedometer), or a compute device. For example, the UE may be a mobile phone (mobile phone), a tablet computer, a notebook computer, a palmtop computer, a mobile internet device (mobile internet device, MID), a satellite terminal, or a computer with wireless receiving and sending functions. Alternatively, the terminal device may be a virtual reality (virtual reality, VR) terminal device, an augmented reality (augmented reality, AR) terminal device, a wireless modem (modem), a smart point of sale (point of sale, POS) terminal, customer-premises equipment (customer-premises equipment, CPE), a smart robot, a mechanical arm, a workshop device, a smart home device (for example, a refrigerator, a television, an air conditioner, or an electric meter), a wireless terminal in industrial control, a wireless terminal in self-driving, a wireless terminal in telemedicine, a wireless terminal in a smart grid (smart grid), a wireless terminal in transportation safety, a wireless terminal in a smart city (smart city), a wireless terminal in a smart home (smart home), a vehicle-mounted terminal, a road side unit (road side unit, RSU) with a terminal function, a flight device (for example, a smart robot, a hot air balloon, an uncrewed aerial vehicle, or an airplane), or the like. Alternatively, the terminal device may be another device that has a terminal function. For example, the terminal device may be a device that functions as a terminal in device-to-device (device-to-device, D2D) communication.

In this application, the terminal may be a terminal in an internet of things (internet of things, IoT) system. IoT is an important part of information technology development. A main technical feature of IoT is that an article is connected to a network by using a communication technology, to implement an intelligent network of human-machine interconnection and interconnection between things. The terminal in this application may be a terminal in machine type communication (machine type communication, MTC). The terminal in this application may be a vehicle-mounted module, a vehicle-mounted component, a vehicle-mounted chip, or a vehicle-mounted unit that is built in a vehicle as one or more components or units. The vehicle may implement the method in this application by using the built-in vehicle-mounted module, vehicle-mounted component, vehicle-mounted chip, or vehicle-mounted unit. The terminal in this application may be a means of delivery, for example, a vehicle. Therefore, this application may be applied to the internet of vehicles, for example, vehicle-to-everything (vehicle-to-everything, V2X), long term evolution-vehicle (long term evolution-vehicle, LTE-V), and vehicle-to-vehicle (vehicle-to-vehicle, V2V).

A form of the terminal is not limited in this application. An apparatus configured to implement a function of the terminal may be a terminal, or may be an apparatus, for example, a chip system, that can support the terminal in implementing the function. The apparatus can be installed in the terminal, or can match the terminal for use. In this application, the chip system may include a chip, or may include a chip and another discrete component.

### 4. Radio access network (radio access network, RAN) node

In this application, the RAN node may be any device having wireless receiving and sending functions, and may help a terminal implement radio access. For example, the RAN node is a node in a RAN, and may also be referred to as an access network device, a network device, or the like. The RAN node includes but is not limited to: an evolved NodeB (NodeB, eNB, or e-NodeB, evolved NodeB) in long term evolution (long term evolution, LTE), an evolved NodeB in next generation LTE (next generation eNB, ng-eNB), a base station (gNodeB or gNB) in new radio (new radio, NR), a transmitting point (transmitting point, TP) or transmission reception point (transmission receiving point/transmission reception point, TRP), a base station subsequently evolved in 3GPP, a next generation NodeB (next generation NodeB, gNB), a next generation NodeB in a 6th generation (6th generation, 6G) mobile communication system, a base station in a future mobile communication system, an access node in a satellite wireless fidelity (wireless fidelity, Wi-Fi) system, a wireless relay node, a wireless backhaul node, an integrated access and backhaul (integrated access and backhaul, IAB) node, a mobile switching center, or a network device in a non-terrestrial communication network (non-terrestrial network, NTN) communication system, that is, may be deployed on a high-altitude platform, a satellite, or the like. The base station may be a macro base station, a micro base station, a pico base station, a small cell, a relay station, a donor node, a balloon station, or the like. A plurality of base stations may support networks of a same technology mentioned above, or may support networks of different technologies mentioned above. The base station may include one or more co-site or non-co-site TRPs. Alternatively, the RAN node may be a device that functions as a base station in D2D communication, internet of vehicles communication, uncrewed aerial vehicle communication, or machine communication. Alternatively, the RAN node may be a radio controller in a cloud radio access network (cloud radio access network, CRAN) scenario. Alternatively, the RAN node may be a central unit (central unit, CU), a distributed unit (distributed unit, DU), a CU-control plane (control plane, CP), a CU-user plane (user plane, UP), a radio unit (radio unit, RU), an RSU having a base station function, a wired access gateway, a core network element, or the like. Alternatively, the RAN node may be a server, a wearable device, a machine communication device, a vehicle-mounted device, or the like. For example, an access network device in a V2X technology may be an RSU.

In this application, the CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the CU may be classified into a network device in an access network, or the CU may be classified into a network device in a core network. This is not limited herein.

In different systems, the CU (or the CU-CP and the CU-UP), the DU, or the RU may alternatively have different names, but a person skilled in the art may understand meanings thereof. For example, in an open radio access network (open radio access network, ORAN) system, the CU may alternatively be referred to as an O-CU (open CU), the DU may alternatively be referred to as an O-DU, the CU-CP may alternatively be referred to as an O-CU-CP, the CU-UP may alternatively be referred to as an O-CU-UP, and the RU may alternatively be referred to as an O-RU. For ease of description, the CU, the CU-CP, the CU-UP, the DU, and the RU are used as examples for description in this application. Any unit in the CU (or the CU-CP or the CU-UP), the DU, and the RU in this application may be implemented by using a software module, a hardware module, or a combination of the software module and the hardware module.

It may be understood that, in some scenarios, roles of the RAN node and the terminal are relative. For example, a helicopter or an uncrewed aerial vehicle that is usually configured as a terminal may be alternatively configured as a mobile base station, and a device that accesses a RAN by using the helicopter or the uncrewed aerial vehicle is configured as a terminal.

A form of the RAN node is not limited in this application. An apparatus configured to implement a function of the RAN node may be a RAN node, or may be an apparatus, for example, a chip system, that can support the RAN node in implementing the function. The apparatus can be installed in the RAN node, or can match the RAN node for use.

### 5. Core network

In this application, the core network is mainly responsible for maintaining subscription data of a mobile network, and providing functions such as session management, mobility management, policy management, and security authentication for a terminal. The core network may be a centralized network architecture, and a network function (network function, NF) of the core network is deployed by a management plane.

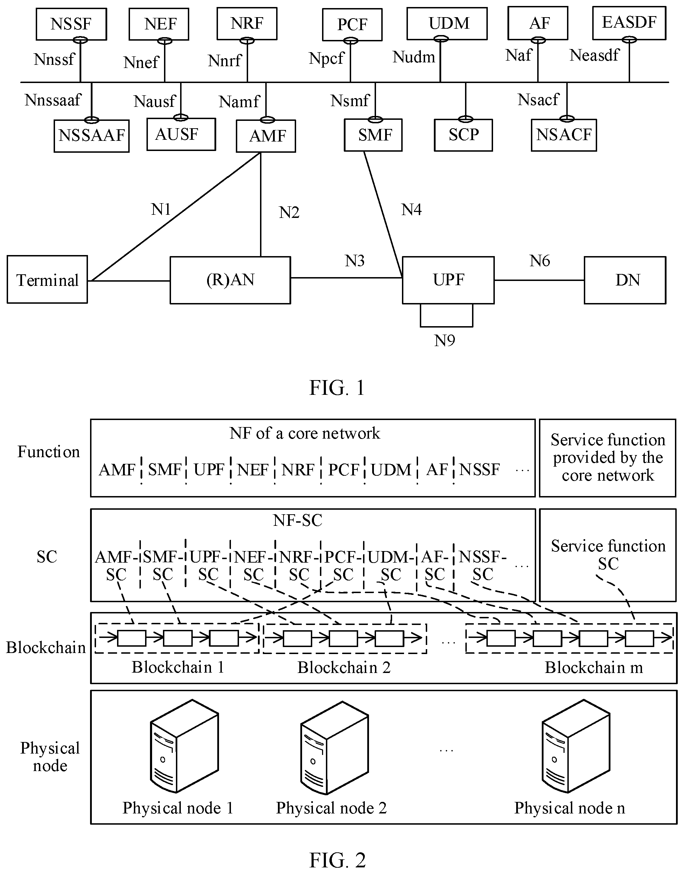

For example, FIG. 1 shows an architecture of a core network by using a network service architecture of a 5th generation (5th generation, 5G) mobile communication system as an example. In FIG. 1, network functions of the core network include a network slice selection function (network slice selection function, NSSF), a network exposure function (network exposure function, NEF), a network repository function (NF repository function, NRF), a policy control function (policy control function, PCF), unified data management (unified data management, UDM), an application function (application function, AF), an edge application server discovery function (edge application server discovery function, EASDF), a network slice-specific and standalone non-public network (standalone non-public network, SNPN) authentication and authorization function (network slice-specific and SNPN authentication and authorization function, NSSAAF), an authentication server function (authentication server function, AUSF), an access management function (access management function, AMF), a session management function (session management function, SMF), a service communication proxy (service communication proxy, SCP), a network slice admission control function (network slice admission control function, NSACF), a user plane function (user plane function, UPF), and a data network (data network, DN). A RAN node may communicate with the AMF and the UPF, and a terminal may communicate with the AMF. The terminal and the RAN node may communicate with each other by using an air interface technology. For descriptions of the terminal and the RAN node, refer to the foregoing corresponding descriptions.

In FIG. 1, N1 is an interface between the terminal and the AMF, N2 is an interface between the RAN node and the AMF, N3 is an interface between the RAN node and the UPF, N4 is an interface between the SMF and the UPF, N6 is an interface between the UPF and the DN, and N9 is an interface between UPFs. Nnssaaf is a service-based interface provided by the NSSAAF, Nausf is a service-based interface provided by the AUSF, Namf is a service-based interface provided by the AMF, Nsmf is a service-based interface provided by the SMF, Nsacf is a service-based interface provided by the NSACF, Nnssf is a service-based interface provided by the NSSF, Nnef is a service-based interface provided by the NEF, Nnrf is a service-based interface provided by the NRF, Npcf is a service-based interface provided by the PCF, Nudm is a service-based interface provided by the UDM, Naf is a service-based interface provided by the AF, and Neasdf is a service-based interface provided by the EASDF.

It may be understood that the core network shown in FIG. 1 is merely an example. In specific application, the core network may include more or fewer network functions than those shown in FIG. 1. This is not limited.

Based on the foregoing descriptions, a blockchain has tamper-proofing. Therefore, to improve communication security between communication apparatuses in a communication system, and to support tracing and querying of behavior of the communication apparatuses and various types of data in the communication system, a solution of introducing a blockchain technology into the communication system (for example, a core network) is proposed in the industry. For example, information in the core network may be verified by using a blockchain.

For example, a blockchain account management function (blockchain account management function, BCAMF) network element may connect the core network and a blockchain network, to verify the information in the core network. Specifically, a terminal sends a registration request message to a BCAMF network element of a first operator. The registration request message includes an identifier of the terminal, and the registration request message is used to request to register the terminal with the first operator. After receiving the registration request message from the terminal, the BCAMF network element may verify, in a blockchain based on the identifier of the terminal, that the terminal satisfies a registration requirement, and send a first message to a user data management network element of the first operator. The first message includes subscription data of the terminal, that is, subscription data of the terminal in the first operator. Then, the user data management network element may store the subscription data of the terminal, so that when the terminal subsequently accesses a mobile network of the first operator, a mobility management network element, a session management network element, or the like needs to obtain the subscription data to authorize the terminal.

It can be learned from the foregoing description that the BCAMF network element may verify, in the blockchain based on the identifier of the terminal, that the terminal satisfies the registration requirement, that is, the BCAMF network element can connect a core network and a blockchain network. However, actually, the core network and the blockchain network are still networks independent of each other, and the blockchain network is only used to record data of the core network. This combination manner for the core network and the blockchain network cannot fully utilize advantages of the blockchain.

To more fully utilize the advantages of the blockchain, a decentralized core network may be constructed based on a distributed feature of the blockchain and with reference to a network function of the core network and/or a service function provided by the core network. The decentralized core network may use the blockchain as an infrastructure of the core network, to implement convergence of the blockchain network and the core network, that is, chain-network convergence. Specifically, the network function of the core network and/or the service function provided by the core network may be deployed on the blockchain in a form of SC for invocation by an upper-layer application (APP), a terminal, a RAN node, an AF network element, a network function network element, or an operation, administration and maintenance (operation, administration and maintenance, OAM) network element. After the function is invoked, the corresponding SC is executed, and an execution result is recorded on chain.

It may be understood that in this application, a "network resulting from the convergence of the blockchain network and the core network" is referred to as the "decentralized core network" merely for distinguishing from a "core network that is not converged with the blockchain network", and is not intended to limit the solution of this application. A manner of naming the "network resulting from the convergence of the blockchain network and the core network" is not limited in this application. For example, the decentralized core network may be replaced with a decentralized 3GPP network, a native decentralized core network, a native decentralized telecommunications network, a decentralized telecommunications network, a core network, a 3GPP network, a telecommunications network, a decentralized network, or the like. For ease of description, the decentralized core network is used as an example for description in this application.

The following further explains and describes "the network function of the core network", "the service function provided by the core network", and "the network function of the core network and/or the service function provided by the core network are/is deployed on at least one blockchain in a form of SC".

### 6. Network function of a core network

In this application, the network function of the core network may include any one or more network functions defined in a current protocol, and/or a new network function introduced in a subsequent protocol. For example, the network function of the core network includes one or more network functions shown in FIG. 1. For another example, the network function of the core network includes a new network function introduced in a 6G communication technology.

### 7. Service function provided by a core network

In this application, the service function provided by the core network may include a service function of a third party, and/or a service function related to x as a service (x as a service, XaaS). For example, the service function provided by the core network includes one or more of an internet of things service function, a satellite communication service function, a communication service function, a cloud service function, a network service function, an AI service, a computing service, or a data service.

8. A network function of a core network and/or a service function provided by the core network are/is deployed on at least one blockchain in a form of SC.

In this application, that the network function of the core network is deployed on the blockchain in a form of SC may be understood as that the SC deployed on the blockchain has (or carries) the network function of the core network, or the SC that has the network function of the core network is installed (or deployed) on a blockchain node. For example, executable code that can implement the network function of the core network may be written, and the written executable code is deployed on the blockchain node. It should be understood that one network function may correspond to at least one SC. For example, when one network function is configured to implement one function (for example, a registration function), the network function may correspond to one SC, and the SC has the function; or the network function corresponds to a plurality of SCs, and the plurality of SCs jointly implement the function. When one network function is configured to implement a plurality of functions (for example, a registration function and a control plane signaling forwarding function), the network function may correspond to a plurality of SCs, and the plurality of SCs each have one function of the network function.

Similarly, that the service function provided by the core network is deployed on the blockchain in a form of SC may be understood as that the SC deployed on the blockchain has the service function provided by the core network, or the SC that has the service function provided by the core network is installed on a blockchain node. For example, executable code that can implement the service function provided by the core network may be written, and the written executable code is deployed on the blockchain node. It should be understood that, when one service is configured to implement one function, the service function may correspond to one SC, and the SC has the function; or the service function corresponds to a plurality of SCs, and the plurality of SCs jointly implement the function. When one service is configured to implement a plurality of functions, the service function may correspond to a plurality of SCs, and the plurality of SCs each have one function of the service function.

It may be understood that because the SC in this application has the network function of the core network and/or the service function provided by the core network, the SC may be replaced with a network contract, a network SC, a network function contract, a network function smart contract (NF smart contract, NF-SC), a service contract, a service SC, a service function contract, a service function SC, or the like. It should be understood that in addition to the foregoing names, the SC may be further named in another manner, for example, a contract, a function contract, or a function SC. This is not limited. In this application, the SC is used as an example for description.

The following uses FIG. 2 as an example to describe a specific case in which a network function of a core network and/or a service function provided by the core network are/is deployed on a blockchain in a form of SC.

In FIG. 2, both the network function of the core network and the service function provided by the core network correspond to SCs. These SCs may be deployed on a blockchain, and the blockchain on which the SCs are deployed may be deployed on a physical node. Specifically, an SC of an AMF (namely, an AMF-SC), an SC of an SMF (namely, an SMF-SC), and an SC of a PCF (namely, a PCF-SC) are deployed on a blockchain 1, and the blockchain 1 is deployed on one or more physical nodes in a physical node 1 to a physical node n. An SC of a UPF (namely, a UPF-SC), an SC of an NEF (namely, an NEF-SC), and an SC of a UDM (a UDM-SC) are deployed on a blockchain 2, and the blockchain 2 is deployed on one or more physical nodes in the physical node 1 to the physical node n. An SC of an NFR (namely, an NRF-SC), an SC of an NSSF (namely, an NSSF-SC), an SC of an AF (namely, an AF-SC), and an SC of the service function provided by the core network (namely, a service function SC) are deployed on a blockchain m, and the blockchain m is deployed on one or more physical nodes in the physical node 1 to the physical node n. m and n are positive integers, and m and n may be the same or may be different.

It may be understood that, that the AMF-SC, the SMF-SC, and the PCF-SC are deployed on the blockchain 1, the UPF-SC, the NEF-SC, and the UDM-SC are deployed on the blockchain 2, and the NRF-SC, the NSSF-SC, the AF-SC, and the service function SC are deployed on the blockchain m above is merely a deployment manner of the SCs on the blockchains. The deployment manner of the SCs on the blockchains is not limited in this application. For example, an SC may be deployed on a blockchain based on a service. For example, an SC related to a service 1 is deployed on a blockchain, and an SC other than the SC related to the service 1 is not deployed on the blockchain. For another example, an SC may be deployed on a blockchain based on a network function. For example, an SC of a network function 1 is deployed on a blockchain, and an SC of a service other than the network function 1 is not deployed on the blockchain. It should be understood that, in specific application, there may further be other deployment manners, which are not listed one by one herein.

The following describes a decentralized core network provided in this application with reference to an idea that "a network function of a core network and/or a service function provided by the core network are/is deployed on a blockchain in a form of SC".

### 9. Decentralized core network

It may be understood that, based on the idea that "a network function of a core network and/or a service function provided by the core network are/is deployed on a blockchain in a form of SC", a plurality of network architectures of the decentralized core network may be designed, which cannot be listed one by one in this application. The following design 1 to design 3 are used as examples for description below. In addition, a manner in which the service function provided by the core network is deployed on a blockchain in a form of SC is similar to a manner in which the network function of the core network is deployed on a blockchain in a form of SC. Therefore, for ease of description, the following uses an example in which the network function of the core network is deployed on a blockchain in a form of SC for description. For a case in which the service function provided by the core network is deployed on a blockchain in a form of SC, refer to the following descriptions that the network function of the core network is deployed on a blockchain in a form of SC. Details are not described again.

Design 1: One blockchain is deployed in a decentralized core network, and SCs corresponding to a plurality of network functions of the core network are deployed on the blockchain.

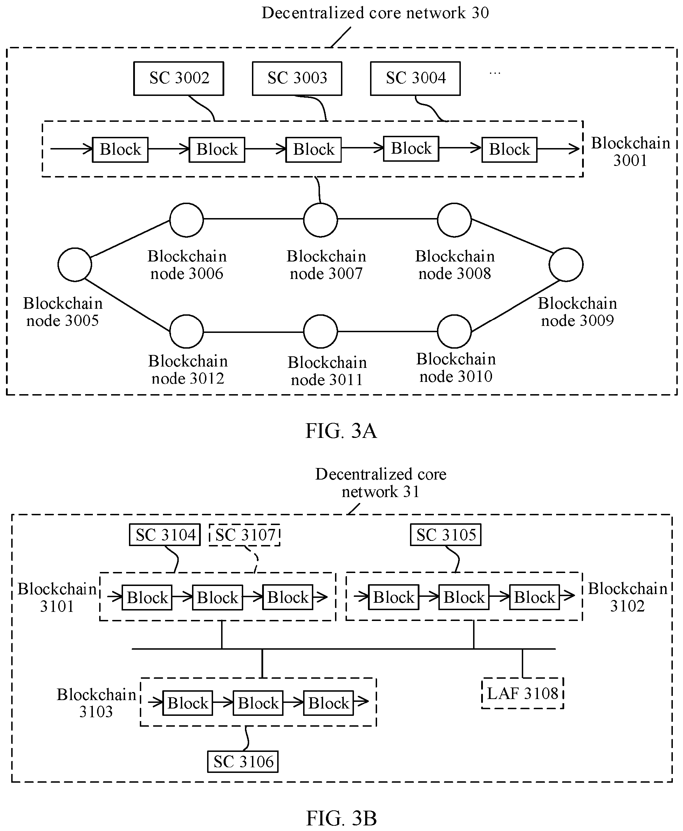

For example, in FIG. 3A, a blockchain 3001 is deployed in a decentralized core network 30, an SC 3002 to an SC 3004 are deployed on the blockchain 3001, and the blockchain 3001 is deployed on a blockchain node 3005 to a blockchain node 3012. In other words, the decentralized core network 30 includes the blockchain node 3005 to the blockchain node 3012, and these blockchain nodes jointly maintain the blockchain 3001 on which the SC 3002 to the SC 3004 are deployed. The SC 3002 to the SC 3004 each correspond to one network function of the core network. For example, the SC 3002 is an AMF-SC, the SC 3003 is an SMF-SC, and the SC 3004 is a UPF-SC.

Optionally, the decentralized core network 30 provides a ledger anchor function (ledger anchor function, LAF), configured to perform work related to a communication network ledger, for example, install or deploy an SC for a blockchain node. For example, the decentralized core network 30 includes an LAF network element (not shown in FIG. 3A).

It may be understood that a network including the blockchain node 3005 to the blockchain node 3012 may also be referred to as a P2P network. The blockchain node 3005 to the blockchain node 3012 may be deployed on a same physical node or different physical nodes.

It may be understood that FIG. 3A is merely an example of a decentralized core network. In specific application, the decentralized core network may include more or fewer blockchain nodes than those shown in FIG. 3A, and/or more or fewer SCs than those shown in FIG. 3A may be deployed on the blockchain 3001. This is not limited.

It may be understood that, in design 1, one blockchain is deployed in the decentralized core network, so that the blockchain can be conveniently maintained.

Design 2: A plurality of blockchains are deployed in a decentralized core network, and an SC corresponding to one or more network functions of the core network is deployed on each of the plurality of blockchains.

For example, in FIG. 3B, a blockchain 3101 to a blockchain 3103 are deployed in a decentralized core network 31. An SC 3104 and an SC 3107 are deployed on the blockchain 3101, an SC 3105 is deployed on the blockchain 3102, and an SC 3106 is deployed on the blockchain 3103. The SC 3104 to the SC 3107 each correspond to one network function of the core network. In other words, the decentralized core network 31 includes all or some blockchain nodes (not shown in FIG. 3B) that maintain the blockchain 3101 to the blockchain 3101. A blockchain node that maintains the blockchain 3101, a blockchain node that maintains the blockchain 3102, and a blockchain node that maintains the blockchain 3103 may be completely the same, partially the same, or completely different. For example, a blockchain node 1 to a blockchain node 5 jointly maintain the blockchain 3101 and the blockchain 3102, and a blockchain node 6 to a blockchain node 12 maintain the blockchain 3103; or a blockchain node 1 to a blockchain node 6 maintain the blockchain 3101, a blockchain node 7 to a blockchain node 13 maintain the blockchain 3102, and a blockchain node 14 to a blockchain node 22 maintain the blockchain 3103.

Optionally, the decentralized core network 31 provides an LAF, configured to perform work related to a communication network ledger, for example, install or deploy an SC for a blockchain node. For example, the decentralized core network 31 includes an LAF network element 3108.

Optionally, a plurality of SCs may be deployed on one blockchain in the decentralized core network 31. For example, in addition to the SC 3104, an SC 3107 is further deployed on the blockchain 3101.

It may be understood that FIG. 3B is merely an example of a decentralized core network. In specific application, the decentralized core network may include more or fewer blockchains than those shown in FIG. 3B, and/or more or fewer SCs than those shown in FIG. 3B may be deployed on one blockchain. This is not limited.

It may be understood that, in design 2, a plurality of blockchains are deployed in the decentralized core network, different SCs may be deployed on different blockchains, and a relatively small amount of data is stored on each blockchain. This facilitates data maintenance and management, and a relatively short time is needed for data tracing or querying.

It may be understood that, in an evolution process of a network architecture, to consider an existing network and reduce network deployment costs, the network architecture is usually gradually updated. For example, some network functions of a core network are first deployed on a blockchain in a form of SC, and then remaining network functions are gradually deployed on the blockchain in a form of SC. Therefore, in a network architecture update process, in the core network, there may be a case in which some network functions are still deployed in the network in a form of network function and the other network functions are deployed on a blockchain in a form of SC. This network architecture may be referred to as a hybrid networking architecture, a partially decentralized core network architecture, or the like. The following uses the hybrid networking architecture as an example for description.

Design 3: At least one network function and at least one blockchain are deployed in a hybrid network, and an SC corresponding to one or more network functions of a core network is deployed on each of the at least one blockchain.

It may be understood that the hybrid network may be further divided into domains based on a deployment manner of the network function in the network. For example, the hybrid network includes a service-based architecture (service-based architecture, SBA) domain and an SC domain, the at least one network function is deployed in the SBA domain, and the at least one blockchain is deployed in the SC domain. In this application, "domain" may be replaced with "region", "part", "architecture", or the like. This is not limited. It should be understood that the SC domain is related to a blockchain. Therefore, the SC domain may be replaced with a block domain, a blockchain domain, a blockchain node domain, or the like. This is not limited. In addition, a manner for connection between the SBA domain and the SC domain (or a manner for connection between a blockchain node and a network function network element) is not limited in this application. For example, a newly defined interface may be used for connection.

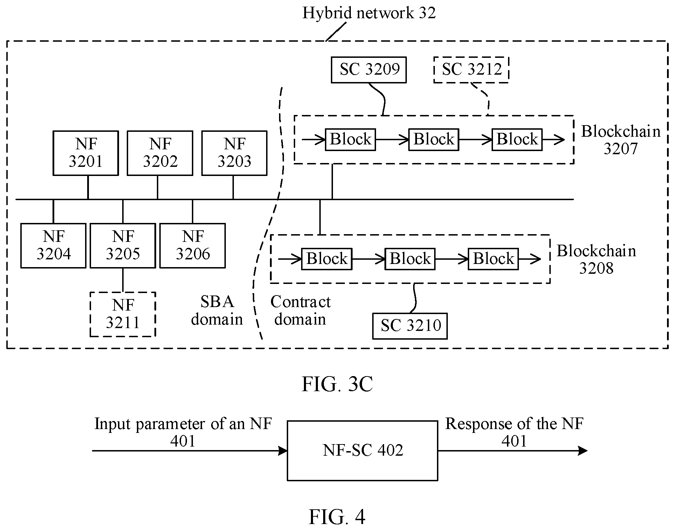

For example, in FIG. 3C, an NF 3201 to an NF 3206 and a blockchain 3207 and a blockchain 3208 are deployed in the hybrid network 32. An SC 3209 is deployed on the blockchain 3207, and an SC 3210 is deployed on the blockchain 3208. The SC 3209 and the SC 3210 each correspond to one network function of the core network. In other words, the hybrid network 32 may include all or some blockchain nodes (not shown in FIG. 3C) that maintain the blockchain 3207 and the blockchain 3208. A blockchain node that maintains the blockchain 3207 and a blockchain node that maintains the blockchain 3208 may be completely the same, partially the same, or completely different.

Optionally, the hybrid network 32 provides an LAF, configured to perform work related to a communication network ledger, for example, install or deploy an SC for a blockchain node. In other words, the hybrid network 32 includes an LAF network element (not shown in FIG. 3C).

Optionally, a plurality of SCs may be deployed on one blockchain in the hybrid network 32. For example, in addition to the SC 3209, an SC 3212 is further deployed on the blockchain 3207.

It may be understood that FIG. 3C is merely an example of a hybrid network. In specific application, the hybrid network may include more or fewer blockchains than those shown in FIG. 3C, and/or more or fewer network functions than those shown in FIG. 3C, and/or more or fewer SCs than those shown in FIG. 3C may be deployed on one blockchain. This is not limited.

Based on the foregoing descriptions, a manner for convergence of a blockchain network and a core network is understood to some extent. In a converged network (for example, a decentralized core network), an SC has a network function of the core network. Details are described below.

In a possible implementation, an input parameter of the network function is input into the SC corresponding to the network function (namely, an NF-SC), to obtain a response of the network function or an output parameter of the network function.

It may be understood that a network function in the core network needs to obtain some parameters in advance when implementing a function of the network function, for example, a subscription permanent identifier (subscription permanent identifier, SUPI) of a terminal, a subscription concealed identifier (subscription concealed identifier, SUCI) of a terminal, or an identifier of a public land mobile network (public land mobile network, PLMN). For example, when registering the terminal, an AMF needs to obtain the SUPI of the terminal in advance. These parameters may be referred to as input parameters of the network function. In addition, when implementing the function of the network function, the network function may obtain a corresponding output parameter based on the input parameter, for example, information such as the identifier of the PLMN, the SUPI of the terminal, the SUCI of the terminal, an identifier of the terminal in a 3GPP network, an authentication vector, or a key. For example, after completing registration of the terminal, the AMF allocates an identifier in a 3GPP network to the terminal. These output parameters may be referred to as responses of the network function. Because the SC has a network function, a corresponding response may be obtained by inputting an input parameter of the network function into the SC. For example, in FIG. 4, an input parameter of an NF 401 may be input into an SC corresponding to the NF 401 (namely, an NF-SC 402), to obtain a response of the NF 401.

Optionally, a trigger condition and/or a response rule may be preset in the SC. The trigger condition may include a condition that is set for a time and/or an event and that triggers the SC to implement a corresponding network function. The response rule may define how the SC responds to different actions. It may be understood that executable code for implementing the trigger condition may be written for the SC, so that the SC is executed or invoked under the trigger condition. Executable code for implementing the response rule may be written for the SC, so that the SC makes a corresponding response when being executed. Taking an SC corresponding to a charging function (charging function, CHF) as an example, a trigger condition thereof is that call duration of a user A is longer than 100 minutes, and a response rule thereof is that a corresponding call fee is deducted from an account of the user A. That is, when the call duration of the user A is longer than 100 minutes, execution of the SC is triggered. When the SC is executed, the corresponding call fee may be deducted from the account of the user A.

Optionally, because the SC is deployed on a blockchain, a trigger condition and/or a response rule for one or more blockchains or a trigger condition and/or a response rule for one or more SCs may be preset in the SC. For example, the following trigger condition is preset in an NF-SC 1 in a blockchain 1: After the NF-SC 1 is updated, a notification message is sent to a blockchain node in a blockchain 2. In this way, after the NF-SC 1 is updated, a blockchain node in the blockchain 1 may send the notification message to the blockchain node in the blockchain 2.

### 10. Deployment manner of an SC on a blockchain

In this application, the SC is a segment of executable code used to implement a network function. Therefore, that the SC is deployed on the blockchain may be understood as that the SC is installed/deployed on a blockchain node. It should be understood that the blockchain node has a running environment of the SC.

It may be understood that the SC may be installed on a plurality of blockchain nodes, and these nodes may be referred to as deployment nodes of the SC, but not all the blockchain nodes are nodes that execute (or run) the SC. For example, some of the plurality of blockchain nodes are execution nodes of the SC, and the other blockchain nodes are verification nodes of the SC and are configured to verify an execution result of the SC, to ensure correctness of the execution result of the SC. A quantity of execution nodes of the SC is greater than or equal to 1, and a quantity of verification nodes of the SC is greater than or equal to 1. For example, the SC is deployed on a blockchain node 1 to a blockchain node 10, the blockchain node 1 and the blockchain node 2 are configured to execute the SC, and the blockchain node 3 to the blockchain node 10 are configured to verify the SC. The blockchain node 1 to the blockchain node 10 are deployment nodes of the SC, the blockchain node 1 and the blockchain node 2 are execution nodes of the SC, and the blockchain node 3 to the blockchain node 10 are verification nodes of the SC.

It may be understood that the SC may be installed on a plurality of blockchain nodes of one blockchain, or on a plurality of blockchain nodes of a plurality of blockchains. This is not limited.

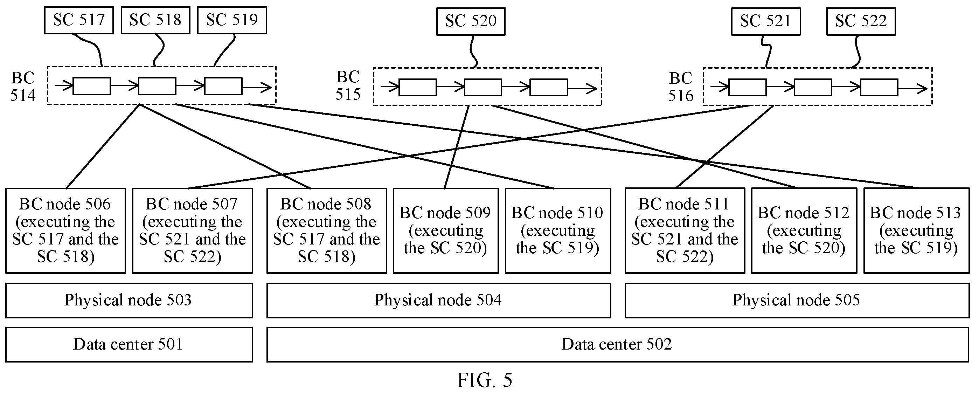

For example, FIG. 5 is a diagram of a deployment manner of an SC. In FIG. 5, an SC 517, an SC 518, and an SC 519 are deployed on a blockchain (BC) 514, and the blockchain 514 is deployed on a blockchain node 506, a blockchain node 508, a blockchain node 510, and a blockchain node 513. In other words, the SC 517, the SC 518, and the SC 519 are installed on the blockchain node 506, the blockchain node 508, the blockchain node 510, and the blockchain node 513. However, not all of the foregoing blockchain nodes are execution nodes of the SC 517, the SC 518, and the SC 519. For example, in FIG. 5, execution nodes of the SC 517 and the SC 518 are the blockchain node 506 and the blockchain node 508, and execution nodes of the SC 519 are the blockchain node 510 and the blockchain node 513. An SC 520 is deployed on a blockchain 515, and the blockchain 515 is deployed on a blockchain node 509 and a blockchain node 512. In other words, the SC 520 is installed on the blockchain node 509 and the blockchain node 512. In FIG. 5, both the blockchain node 509 and the blockchain node 512 are execution nodes of the SC 520. An SC 521 and an SC 522 are deployed on a blockchain 516, and the blockchain 516 is deployed on a blockchain node 507 and a blockchain node 511. In other words, the SC 521 and the SC 522 are installed on the blockchain node 507 and the blockchain node 511. In FIG. 5, both the blockchain node 507 and the blockchain node 511 are execution nodes of the SC 521 and the SC 522.

It may be understood that a blockchain node may be deployed on a physical node, and the physical node may be deployed in a data center. For example, in FIG. 5, the blockchain node 506 and the blockchain node 507 are deployed on a physical node 503, and the physical node 503 is deployed in a data center 501. The blockchain node 508 to the blockchain node 510 are deployed on a physical node 504, the blockchain node 511 to the blockchain node 513 are deployed on a physical node 505, and the physical node 504 and the physical node 505 are deployed in a data center 502.

In this application, if an SC is installed on a blockchain node, the blockchain node (or a blockchain maintained by the blockchain node) stores information about the SC.

In a possible design, the information about the SC includes at least one of an identifier of a blockchain on which the SC is located or an identifier of the SC. The identifier of the blockchain on which the SC is located indicates the blockchain on which the SC is located or the blockchain on which the SC is deployed, and for example, is an ID of the blockchain. The identifier of the SC may indicate the SC, and for example, is an SC ID or an internet protocol (Internet Protocol, IP) address of the SC.

Optionally, the information about the SC further includes at least one of the following: information about a verification node of the SC, information about an execution node of the SC, information about a deployment node of the SC, key information of the SC, token access manner information of the SC, version information of the SC, an input parameter of a network function of the SC, or information about a network function of the SC.

In this application, the information about the verification node of the SC indicates the verification node of the SC. For example, the information about the verification node of the SC includes an identifier of the verification node of the SC or an IP address of the verification node of the SC. The information about the execution node of the SC indicates the execution node of the SC. For example, the information about the execution node of the SC includes an identifier of the execution node of the SC or an IP address of the execution node of the SC. The information about the deployment node of the SC indicates the node on which the SC is deployed (or installed). For example, the information about the deployment node of the SC includes an identifier of the node on which the SC is deployed (or installed), or an IP address of the node on which the SC is deployed (or installed). The key information of the SC includes one or more of a public key of the SC, a public key certificate of the SC, or a private key of the SC. The token (token) access manner information of the SC indicates a token access manner of the SC. The token access manner information of the SC includes an identifier of an SC that can be accessed by the SC. Optionally, the token access manner information of the SC includes a validity period for access by the SC. The version information of the SC indicates a version of the SC. For example, the version information of the SC includes a version number of the SC. The information about the network function of the SC indicates the network function of the SC. For example, the information about the network function of the SC includes an identifier of the network function of the SC or an interface provided by the network function of the SC. The information about the network function of the SC may further include a number segment of a terminal supported by the network function of the SC, and/or location information of the network function of the SC. The identifier of the SC and the token access manner information of the SC may be referred to as an account of the SC.

It may be understood that the following embodiments of this application relate to a plurality of SCs, for example, a first SC and a second SC. Content included in information about these SCs is similar to content included in the information about the foregoing SC. For details, refer to the foregoing descriptions of the information about the SC. A unified description is provided herein, and details are not described below again.

The foregoing specifically describes a decentralized core network and an SC deployed in the core network. In the foregoing decentralized core network, a network function of the core network is deployed on a blockchain in a form of SC, to implement convergence of a blockchain network and the core network. Therefore, in a converged network, how to perform communication between nodes based on a blockchain technology is still an urgent problem to be resolved. To resolve this problem, this application provides a plurality of methods, which are respectively related to an SC discovery process, an SC subscription process, an SC invocation process, and an SC authorization process. The following separately provides descriptions.

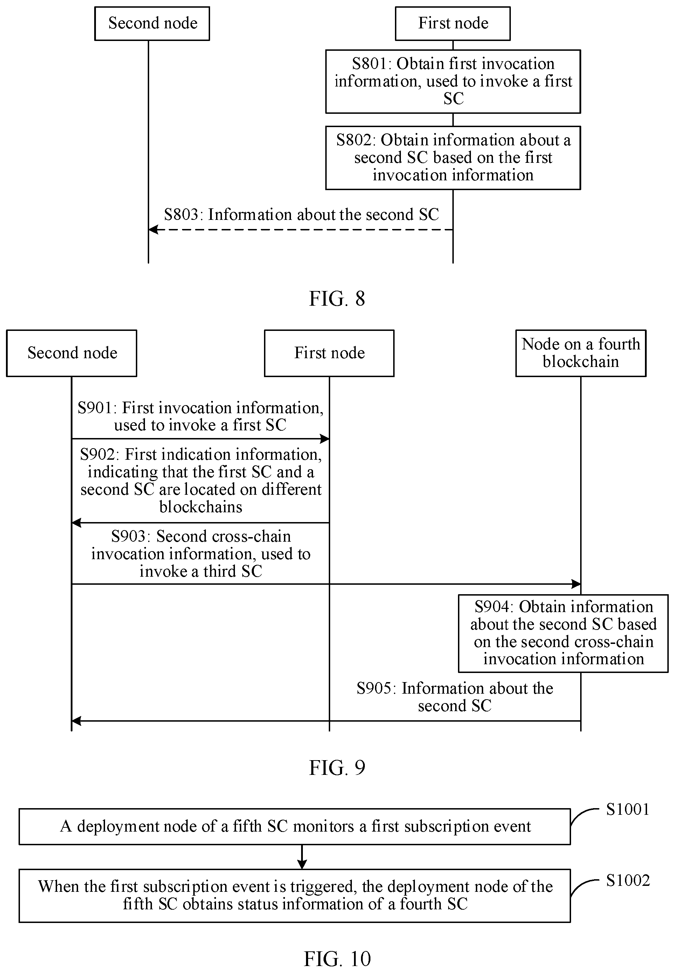

Method 1: A first node may obtain first invocation information, and obtain information about a second SC based on the first invocation information. The first invocation information is used to invoke a first SC, the first SC is used to discover the second SC, and the second SC has a network function of a core network. The foregoing method 1 relates to an SC discovery process. In method 1, the first node may discover the second SC by invoking the first SC, to obtain the information about the second SC, so as to subsequently invoke the second SC. In other words, the first SC has a function of discovering another SC (for example, the second SC), so that a node that needs to invoke the second SC can conveniently obtain the information about the second SC by using the first SC. This method is specifically described in the following method shown in FIG. 8.

Method 2: A second node sends first invocation information to a first node, to invoke a first SC, so that the first SC discovers a second SC. After receiving the first invocation information, the first node executes the first SC, discovers that the first SC and the second SC are located on different blockchains, and may indicate, to the second node, that the first SC and the second SC are located on different blockchains. The second node initiates cross-chain invocation according to an indication of the first node, to invoke a third SC that is located on a same blockchain as the second SC, where the third SC is used to discover the second SC. The foregoing method 2 relates to an SC discovery process. In method 2, the second node may invoke the third SC across chains, to discover the second SC, thereby obtaining information about the second SC, so as to subsequently invoke the second SC. This method is specifically described in the following method shown in FIG. 9.

Method 3: A deployment node of a fifth SC monitors a first subscription event, and when the first subscription event is triggered, the deployment node of the fifth SC obtains status information of a fourth SC. At least one of the fourth SC or the fifth SC has a network function of a core network. The foregoing method 3 relates to an SC subscription process. In method 3, when the first subscription event is triggered, the deployment node of the fifth SC may obtain the status information of the fourth SC that the fifth SC subscribes to, to obtain a latest status of the fourth SC, so as to facilitate subsequent invocation. This method is specifically described in the following method shown in FIG. 10.

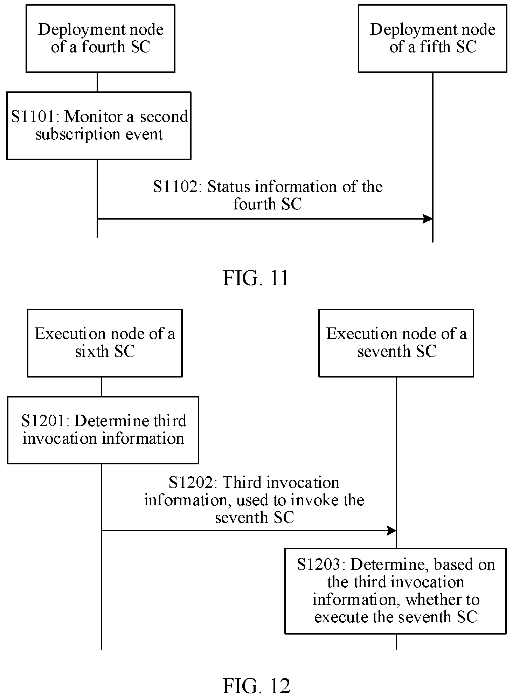

Method 4: A deployment node of a fourth SC monitors a second subscription event, and when the second subscription event is triggered, the deployment node of the fourth SC sends status information of the fourth SC to a deployment node of a fifth SC. The fifth SC subscribes to the fourth SC, and at least one of the fourth SC or the fifth SC has a network function of a core network. The foregoing method 4 relates to an SC subscription process. In method 4, when the second subscription event is triggered, the deployment node of the fourth SC may send the status information of the fourth SC to the deployment node of the fifth SC, so that the deployment node of the fifth SC obtains a latest status of the fourth SC, to facilitate subsequent invocation. This method is specifically described in the following method shown in FIG. 11.

Method 5: An execution node of a sixth SC determines third invocation information, and sends the third invocation information to an execution node of a seventh SC. The third invocation information is used to invoke the seventh SC, the third invocation information includes first information, the first information is used to obtain access permission (or invocation permission) for the sixth SC to access the seventh SC, and at least one of the sixth SC or the seventh SC has a network function of a core network. After receiving the third invocation information, the execution node of the seventh SC determines, based on the third invocation information, whether to execute the seventh SC. Method 5 relates to an SC invocation process. In method 5, when the seventh SC is invoked, the execution node of the seventh SC may determine whether the sixth SC that invokes the seventh SC has access permission, to improve communication security. This method is specifically described in the following method shown in FIG. 12.

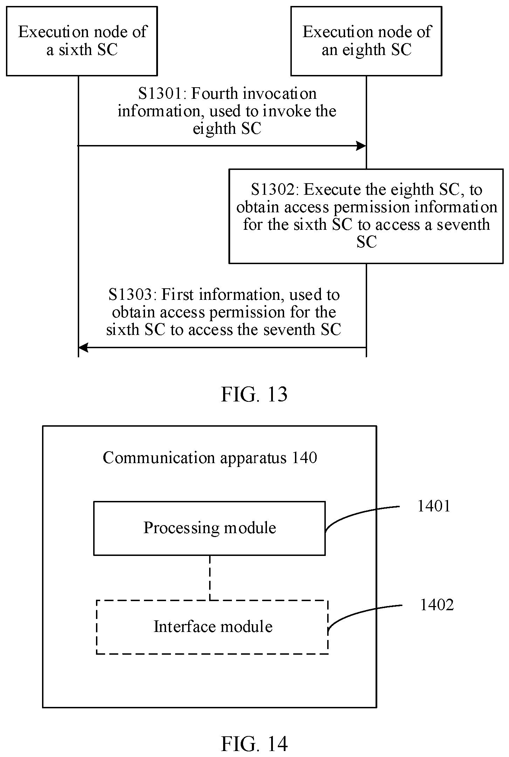

Method 6: An execution node of a sixth SC sends fourth invocation information to an execution node of an eighth SC. The fourth invocation information is used to invoke the eighth SC. After receiving the fourth invocation information, the execution node of the eighth SC executes the eighth SC to obtain access permission information for a sixth SC to access a seventh SC, and sends first information to the execution node of the sixth SC. Method 6 relates to an SC authorization process. In method 6, the eighth SC may authorize the sixth SC with permission to access the seventh SC, so that the sixth SC invokes the seventh SC. This method is specifically described in the following method shown in FIG. 13.

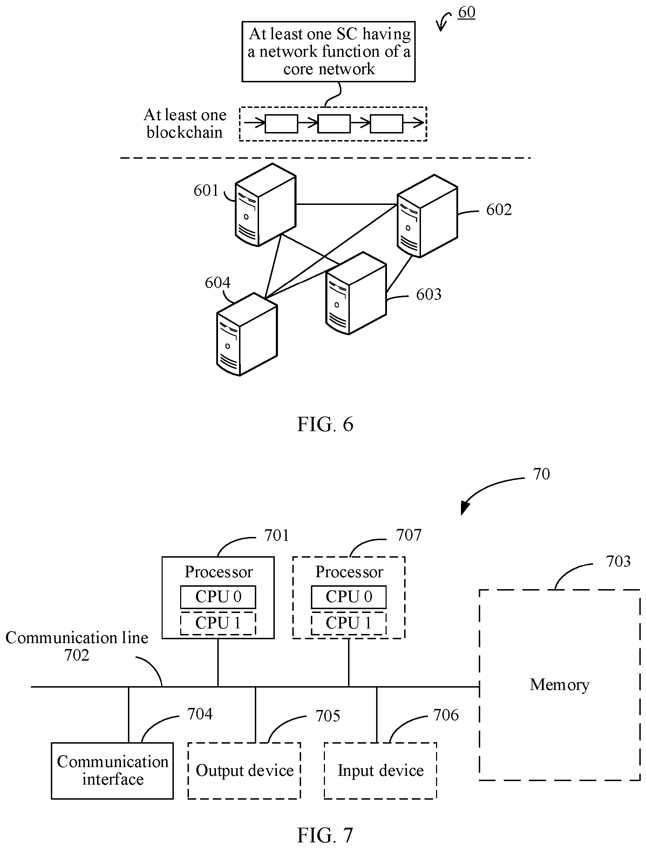

The foregoing method 1 to method 6 may be applied to a communication system in which a blockchain network and a core network are converged. The core network may be an LTE core network, a 5G core network, a core network evolved after 5G (for example, a 6G core network), or the like. This is not limited. 5G may also be referred to as NR. The method provided in this application is described below by using a communication system 60 shown in FIG. 6 as an example. FIG. 6 is merely a diagram, and does not constitute a limitation on a scenario to which the technical solutions provided in this application are applicable.

The communication system 60 shown in FIG. 6 includes at least two nodes that are communicatively connected, for example, a node 601 and a node 602. Optionally, the communication system 60 further includes a node 603 and/or a node 604. All or some of the at least two nodes maintain at least one blockchain, and at least one SC that has a network function of a core network is deployed on the at least one blockchain. It may be understood that when all of the at least two nodes maintain at least one blockchain, the at least two nodes are blockchain nodes; or when some of the at least two nodes maintain at least one blockchain, a node that maintains the blockchain is a blockchain node, and a node that does not maintain the blockchain is a network element corresponding to a network function of the core network. A manner for connection between the at least two nodes is not limited in this application. For example, the at least two nodes may be connected in a wired or wireless manner. The wireless manner includes a communication manner such as 4G, 5G, or 6G.

Optionally, the network function of the core network is configured to provide at least one of the following services: a subscription service, an authentication service, a registration service, a mobility management service, a policy management service, a data processing service, a charging service, a session management service, or at least one service that can be provided by a core network (for example, a 6G core network) after 5G. For example, the core network after 5G can provide at least one of the following services: a computing service, a sensing service, or an AI service. It may be understood that the foregoing services are merely examples of services provided by the network function of the core network. In specific application, the network function of the core network may provide more or fewer services than the foregoing services. This is not limited.

For example, the network function of the core network includes at least one of the following: an access function, a mobility management function, a network repository function, unified data management, an authentication server function, a session management function, a user plane function, a policy control function, a network exposure function, a computing plane function (for example, a computing plane function in a 6G core network), a data plane function (for example, a data plane function in a 6G core network), or a smart plane function (for example, a smart plane function in a 6G core network). For example, the network function of the core network includes at least one of the following: an AMF, an NRF, a UDM, an AUSF, an SMF, a UPF, a PCF, an NEF, or a function corresponding to a further network function.

It may be understood that the communication system 60 may be applied to the foregoing decentralized core network or hybrid network.

For example, if the communication system 60 is applied to the foregoing decentralized core network 30, the node 601 to the node 604 are any four blockchain nodes in the decentralized core network 30. For example, the node 601 is the blockchain node 3007, the node 602 is the blockchain node 3008, the node 603 is the blockchain node 3009, and the node 604 is the blockchain node 3010. If the communication system 60 is applied to the foregoing decentralized core network 31, the node 601 to the node 604 are nodes that maintain a blockchain deployed in the decentralized core network 31. For example, the node 601 and the node 602 are blockchain nodes that maintain the blockchain 3101, the node 603 is a node that maintains the blockchain 3102, and the node 604 is a node that maintains the blockchain 3103. If the communication system 60 is applied to the foregoing hybrid network 32, the node 601 to the node 604 are nodes that maintain a blockchain deployed in the hybrid network 32. For example, the node 601 is a blockchain node that maintains the blockchain 3207, and the node 602 to the node 604 are nodes that maintain the blockchain 3208. Alternatively, some nodes in the node 601 to the node 604 are nodes that maintain a blockchain deployed in the hybrid network 32, and the other nodes are network elements corresponding to a network function of a core network. For example, the node 601 is a blockchain node that maintains the blockchain 3207, the node 602 is a node that maintains the blockchain 3208, the node 603 is a network element of the NF 3201, and the node 604 is a network element of the NF 3023.

The communication system 60 shown in FIG. 6 is merely used as an example, and is not intended to limit the technical solutions of this application. A person skilled in the art should understand that, during specific implementation, the communication system 60 may further include another device, and a quantity of nodes may be determined according to a specific requirement. This is not limited.

Optionally, each node (for example, the node 601, the node 602, the node 603, or the node 604) in FIG. 6 of this application may also be referred to as a communication apparatus, and may be a general-purpose device or a dedicated device. This is not specifically limited in this application.

Optionally, a related function of each node (for example, the node 601, the node 602, the node 603, or the node 604) in FIG. 6 of this application may be implemented by one device, or may be jointly implemented by a plurality of devices, or may be implemented by one or more functional modules in one device. This is not specifically limited in this application. It may be understood that the foregoing function may be an element in a hardware device, or may be a software function running on dedicated hardware, a combination of hardware and software, or a virtualization function instantiated on a platform (for example, a cloud platform).

During specific implementation, each node (for example, the node 601, the node 602, the node 603, or the node 604) in FIG. 6 of this application may use a composition structure shown in FIG. 7, or include a component shown in FIG. 7. FIG. 7 is a diagram of a hardware structure of a communication apparatus to which this application is applicable. The communication apparatus 70 includes at least one processor 701 and at least one communication interface 704, to implement the method provided in this application. The communication apparatus 70 may further include a communication line 702 and a memory 703.

The processor 701 may be a general-purpose central processing unit (central processing unit, CPU), a microprocessor, an application-specific integrated circuit (application-specific integrated circuit, ASIC), or one or more integrated circuits configured to control program execution in the solutions of this application.

The communication line 702 may include a path for transferring information between the foregoing components, for example, a bus.

The communication interface 704 is configured to communicate with another device or a communication network. The communication interface 704 may be any apparatus like a transceiver, for example, may be an Ethernet interface, a radio access network (radio access network, RAN) interface, a wireless local area network (wireless local area network, WLAN) interface, a transceiver, a pin, a bus, an interface circuit, or a transceiver circuit.

The memory 703 may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer. However, this is not limited. The memory may exist independently, and is coupled to the processor 701 through the communication line 702. The memory 703 may be alternatively integrated with the processor 701. Usually, the memory provided in this application may be non-volatile.

The memory 703 is configured to store computer-executable instructions for performing the solutions provided in this application, and the processor 701 controls execution. The processor 701 is configured to execute the computer executable instructions stored in the memory 703, to implement a method provided in this application. Alternatively, optionally, in this application, the processor 701 may perform a processing-related function in a method provided below in this application, and the communication interface 704 is responsible for communicating with another device or a communication network. This is not specifically limited in this application.

Optionally, the computer-executable instructions in this application may also be referred to as application program code. This is not specifically limited in this application.

The coupling in this application is an indirect coupling or a communication connection between apparatuses, units, or modules, may be in an electrical form, a mechanical form, or another form, and is used for information exchange between the apparatuses, the units, or the modules.

In an embodiment, the processor 701 may include one or more CPUs, for example, a CPU 0 and a CPU 1 in FIG. 7.

In an embodiment, the communication apparatus 70 may include a plurality of processors, for example, a processor 701 and a processor 707 in FIG. 7. Each of these processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 70 may further include an output device 705 and/or an input device 706. The output device 705 is coupled to the processor 701, and may display information in a plurality of manners. For example, the output device 705 may be a liquid crystal display (liquid crystal display, LCD), a light-emitting diode (light-emitting diode, LED) display device, a cathode ray tube (cathode ray tube, CRT) display device, or a projector (projector). The input device 706 is coupled to the processor 701, and may receive input of a user in a plurality of manners. For example, the input device 706 may be a mouse, a keyboard, a touchscreen device, a sensing device, or the like.

It may be understood that the composition structure shown in FIG. 7 does not constitute a limitation on the communication apparatus. In addition to the parts shown in FIG. 7, the communication apparatus may include more or fewer parts than those shown in the figure, or some parts may be combined, or different part arrangements may be used.

The following describes the method provided in this application with reference to the accompanying drawings. Network elements in the following embodiments may have the components shown in FIG. 7. Details are not described again.

It may be understood that, in this application, "/" may indicate an "or" relationship between associated objects. For example, A/B may indicate A or B. "And/or" may be used to describe three relationships between associated objects. For example, A and/or B may indicate three cases: Only A exists, both A and B exist, and only B exists. A and B may be singular or plural. In addition, an expression similar to "at least one of A, B, and C" or "at least one of A, B, or C" is usually used to represent any one of the following: Only A exists; only B exists; only C exists; both A and B exist; both A and C exist; both B and C exist; and A, B, and C all exist. The foregoing uses three elements A, B, and C as an example to describe an optional item of the project. When there are more elements in the expression, a meaning of the expression may be obtained according to the foregoing rule.

For ease of description of the technical solutions of this application, in this application, the terms "first", "second", and the like may be used to distinguish between technical features with a same function or similar functions. The terms such as "first" and "second" do not limit a quantity or an execution order, and the terms such as "first" and "second" do not necessarily indicate a difference. In this application, terms such as "example" or "for example" are used to represent giving an example, an illustration, or a description. Any embodiment or design scheme described with "example" or "for example" should not be explained as being more preferred or having more advantages than another embodiment or design scheme. The terms such as "example" or "for example" are used to present a related concept in a specific manner for ease of understanding.

It may be understood that, an "embodiment" mentioned throughout this specification means that particular features, structures, or characteristics related to the embodiment are included in at least one embodiment of this application. Therefore, embodiments in the entire specification do not necessarily refer to a same embodiment. Further, these specific features, structures, or characteristics may be combined in one or more embodiments in any suitable manner. It may be understood that in embodiments of this application, sequence numbers of processes do not mean a sequence of execution. The sequence of execution of the processes should be determined according to functions and internal logic of the processes, and should not constitute any limitation on an implementation process of this application.

It may be understood that, in this application, "when" and "if" mean that corresponding processing is performed in an objective situation, are not intended to limit time, do not necessarily require a determining action during implementation, and do not mean any other limitation.

"Simultaneously" in this application may be understood as being at a same time point, may be understood as being in a period of time, or may be understood as being in a same periodicity.

In this application, "a plurality of' may be understood as two or more, unless otherwise specified. For example, a plurality of blockchain nodes may be understood as two or more blockchain nodes.

It may be understood that in some scenarios, some optional features in this application may be independently implemented without depending on other features, for example, a solution on which the optional features are currently based, to resolve a corresponding technical problem and achieve corresponding effects. Alternatively, in some scenarios, the optional features may be combined with other features based on a requirement. Correspondingly, the apparatus provided in this application may also correspondingly implement these features or functions. Details are not described herein.

It may be understood that, in this application, a same step, or steps or technical features that have a same function may be mutually referenced between different embodiments.

The following describes the SC-based communication method provided in this application by using interaction between a first node, a second node, a deployment node of a fifth SC, a deployment node of a fourth SC, an execution node of a sixth SC, an execution node of a seventh SC, and an execution node of an eighth SC as an example. It should be understood that any one of these nodes may perform some or all of the steps in this application. These steps are merely examples. In this application, other steps or variations of various steps may be further performed. In addition, the steps may be performed in a sequence different from that presented in this application, and not all the steps in this application may be performed.

In addition, in the following method provided in this application, an example in which the first node, the second node, the deployment node of the fifth SC, the deployment node of the fourth SC, the execution node of the sixth SC, the execution node of the seventh SC, and the execution node of the eighth SC are used as execution bodies of the interaction illustration is used to illustrate the method. However, the execution bodies of the interaction illustration are not limited in this application. For example, various nodes in the method provided in the following embodiments of this application each may alternatively be a chip, a chip system, or a processor that supports the node in implementing the method, or may be a logical node, a logical module, or software that can implement all or some functions of the node.

This application provides a plurality of SC-based communication methods, to implement communication between nodes based on a blockchain technology in a network resulting from the convergence of a blockchain network and a core network. These methods respectively relate to an SC discovery process, an SC subscription process, an SC invocation process, and an SC authorization process. The following describes each method in detail with reference to the accompanying drawings.

FIG. 8 shows an SC-based communication method according to this application, and the method relates to an SC discovery process. The method may include the following steps.

S801: A first node obtains first invocation information.

In this application, the first node is any node in the communication system 60 shown in FIG. 6, for example, the node 601. The first invocation information may be used to invoke a first SC, and the first SC is used to discover or query a second SC. In other words, the first SC is an SC that has a discovery function or a query function, and the second SC can be discovered by executing the first SC, to obtain information about the second SC. A quantity of second SCs is not limited in this application. In other words, the first SC may discover one or more second SCs. The first SC may discover different SCs based on different discovery conditions. Therefore, the first invocation information may include a discovery condition, so that the first SC discovers a corresponding SC based on the discovery condition.

For example, the first invocation information includes at least one of the following: an identifier of the second SC, an identifier of a second blockchain, information about a first execution node, information about a first verification node, information about a first deployment node, or information about a first network function, so that the first smart contract discovers the second smart contract that matches one or more types of information in the invocation information. For descriptions of the foregoing information, refer to the foregoing specific descriptions of the information about the SC. Details are not described again. The identifier of the second SC may indicate the second SC. For example, the identifier of the second SC is an ID of the second SC or an IP address of the second SC. The identifier of the second blockchain may indicate the second blockchain. For example, the identifier of the second blockchain is an ID of the second blockchain. The information about the first execution node may indicate the first execution node. For example, the information about the first execution node includes an identifier of the first execution node, an ID of the first execution node, or an IP address of the first execution node. The information about the first verification node may indicate the first verification node. For example, the information about the first verification node includes an identifier of the first verification node, an ID of the first verification node, or an IP address of the first verification node. The information about the first deployment node may indicate the first deployment node. For example, the information about the first deployment node includes an identifier of the first deployment node, an ID of the first deployment node, or an IP address of the first deployment node. The information about the first network function may indicate the first network function. For example, the information about the first network function includes an identifier of the first network function or an interface provided by the first network function. Optionally, the information about the first network function further includes a number segment of a terminal supported by the first network function and/or location information of the first network function.

It may be understood that when the first invocation information includes one type of the foregoing information, the one type of information may be used by the first SC to discover the second SC. For example, the identifier of the second SC may be used by the first SC to discover an SC whose identifier is the identifier of the second SC. The identifier of the second blockchain may be used by the first SC to discover an SC on the second blockchain. In this scenario, all SCs on the second blockchain are second SCs. The information about the first execution node may be used by the first SC to discover an SC that can be executed by the first execution node, or an SC deployed on the first execution node, or an SC that can be verified by the first execution node. In this scenario, the SC that can be executed by the first execution node, or the SC deployed on the first execution node, or the SC that can be verified by the first execution node is the second SC. The information about the first verification node may be used by the first SC to discover an SC that can be verified by the first verification node, an SC deployed on the first verification node, or an SC that can be executed by the first verification node. In this scenario, the SC that can be verified by the first verification node, the SC deployed on the first verification node, or the SC that can be executed by the first verification node is the second SC. The information about the first deployment node may be used by the first SC to discover an SC deployed on the first deployment node, or an SC that can be executed by the first deployment node, or an SC that can be verified by the first deployment node. In this scenario, the SC deployed on the first deployment node, or the SC that can be executed by the first deployment node, or the SC that can be verified by the first deployment node is the second SC. The information about the first network function may be used by the first SC to discover an SC having the first network function. In this scenario, the SC having the first network function is the second SC. When the first invocation information includes a plurality of types of the foregoing information, the plurality of types of information may be used by the first SC to discover the second SC. It may be understood that the second SC is an intersection set of SCs that can be determined based on the plurality of types of information.

It may be understood that when the first invocation information includes a plurality of types of the foregoing information, there may be a plurality of manners of combining the identifier of the second SC, the identifier of the second blockchain, the information about the first execution node, the information about the first verification node, the information about the first deployment node, and the information about the first network function, which are not listed herein one by one. Only the following examples are used for description below. For example, the identifier of the second blockchain and the information about the first execution node may be used by the first SC to discover an SC that can be executed by the first execution node and that is located on the second blockchain, or an SC that is deployed on the first execution node and that is located on the second blockchain, or an SC that can be verified by the first execution node and that is located on the second blockchain. In this scenario, the SC that can be executed by the first execution node and that is located on the second blockchain, or the SC that is deployed on the first execution node and that is located on the second blockchain, or the SC that can be verified by the first execution node and that is located on the second blockchain is the second SC. The identifier of the second blockchain and the information about the first network function may be used by the first SC to discover an SC having the first network function on the second blockchain. In this scenario, the SC having the first network function on the second blockchain is the second SC. The identifier of the second blockchain, the information about the first deployment node, and the information about the first network function may be used by the first SC to discover an SC that is deployed on the first deployment node and located on the second blockchain and that has the first network function, or an SC that can be executed by the first deployment node and is located on the second blockchain and that has the first network function, or an SC that can be verified by the first deployment node and is located on the second blockchain and that has the first network function. In this scenario, the SC that is deployed on the first deployment node and located on the second blockchain and that has the first network function, or the SC that can be executed by the first deployment node and is located on the second blockchain and that has the first network function, or the SC that can be verified by the first deployment node and is located on the second blockchain and that has the first network function is the second SC.

In this application, the first invocation information further includes an identifier of the first SC, so that the first node determines to invoke or execute the first SC. It should be understood that the first invocation information may further include other information of the first SC, for example, one or more of an identifier of a blockchain on which the first SC is located, information about an execution node of the first SC, information about a deployment node of the first SC, information about a verification node of the first SC, key information of the first SC, token access manner information of the first SC, or version identification information of the first SC. This is not limited. For descriptions of the foregoing information, refer to the foregoing specific descriptions of the information about the SC. Details are not described again.

In this application, the second SC has a network function of a core network. For descriptions of a service provided by or a specific function included in the network function of the core network, refer to corresponding descriptions in the communication system 60 shown in FIG. 6. Details are not described again. Optionally, the first SC has a network function of the core network, for example, has a discovery function or a query function, or has a network repository function.

It may be understood that the first node may autonomously generate the first invocation information, or obtain the first invocation information from another node, for example, a second node. The second node is a node that has a capability of invoking the second SC, for example, a terminal, a RAN node, an AF network element, a network function network element, an operation, administration and maintenance (operation, administration and maintenance, OAM) network element, or a blockchain node. The communication system shown in FIG. 6 is used as an example. If the first node is the node 601, the second node is one of the node 602 to the node 604, for example, the node 602, or the second node is a terminal, a RAN node, an AF network element, or an OAM network element that can communicate with the node 601. The terminal, the RAN node, the AF network element, and the OAM network element are not shown in FIG. 6. Optionally, the second node and the first node are nodes on a same blockchain.

In a possible implementation, before invoking the second SC, the first node generates the first invocation information, to obtain the information about the second SC. For example, an event of invoking the second SC by the first node is triggered, and the first node generates the first invocation information, to discover the second SC, so as to subsequently invoke the second SC. Alternatively, when executing an SC, the first node determines that the SC is to invoke the second SC, and the first node generates the first invocation information, to discover the second SC, so as to subsequently invoke the second SC. Alternatively, when the first node executes an SC, the SC indicates to invoke the first SC, and the first node generates the first invocation information, to invoke the first SC.

In another possible implementation, before the second node invokes the second SC (for example, an event of invoking the second SC by the second node is triggered, or when executing an SC, the second node determines that the SC is to invoke the second SC, or when the second node executes an SC, the SC indicates to invoke the first SC), the second node sends the first invocation information to the first node. The first node receives the first invocation information, that is, obtains the first invocation information. It may be understood that the second node may directly send the first invocation information to the first node, or send the first invocation information to the first node through one or more nodes.

S802: The first node obtains the information about the second SC based on the first invocation information.

In this application, the information about the second SC includes at least one of the following: an identifier of a blockchain on which the second SC is located or an identifier of the second SC. Optionally, the information about the second SC further includes at least one of the following: information about a verification node of the second SC, information about an execution node of the second SC, information about a deployment node of the second SC, key information of the second SC, token access manner information of the second SC, version identification information of the second SC, an input parameter of the network function of the second SC, or information about the network function of the second SC. For specific meanings of the foregoing information, refer to the foregoing specific descriptions of the information about the SC. Details are not described again.

It may be understood that the information about the verification node of the second SC may be used to determine the verification node of the second SC, so that the first node or the second node determines specific verification nodes of the second SC. The information about the execution node of the second SC may be used to determine the execution node for executing the second SC, so that the first node or the second node determines specific execution nodes on which the second SC is deployed, and may subsequently invoke the second SC on these execution nodes. The information about the deployment node of the second SC may be used to determine the node on which the second SC is deployed, so that the first node or the second node determines specific nodes on which the second SC is deployed, and may subsequently query related information about the first SC on these nodes. The key information of the second SC may include a public key, a public key certificate, a private key, and the like of the second SC, and be used to carry the information when the first node or the second node invokes the second SC, so that the execution node of the second SC verifies whether the first node or the second node is valid, to improve communication security. The token access manner information of the second SC may be used to determine a token access manner of the second SC, for example, identifiers of SCs that can be accessed by the second SC, and/or validity periods of SCs that can be accessed by the second SC, so as to subsequently invoke these SCs. The version identification information of the second SC may be used to determine a version of the second SC, so that the first node or the second node determines a version of the second SC to be invoked. The input parameter of the network function of the second SC may be used to determine the input parameter of the network function corresponding to the first SC, so that the first node or the second node provides a corresponding parameter when invoking the second SC. The information about the network function of the second SC may be used to determine the network function corresponding to the second SC, so that the first node or the second node determines the network function provided by the second SC.

In this application, the first SC and the second SC may be located on a same blockchain or different blockchains, and the first node may be an execution node of the first SC, or may not be an execution node of the first SC. For the foregoing different cases, a process in which the first node obtains the information about the second SC based on the first invocation information varies. Specific descriptions are provided below.

Case 1: The first SC and the second SC are located on a same blockchain, and the first node is an execution node of the first SC. The first node may execute the first SC to obtain the information about the second SC.

Optionally, the first node may send an execution result of the first SC to a node on a first blockchain, to add the execution result to a chain, so that the execution result of the first SC may be recorded on the first blockchain in a form of transaction, to facilitate tracing. In addition, the node on the first blockchain may obtain the information about the second SC, to facilitate subsequent invocation of the second SC. The first SC is deployed on the first blockchain, or the first SC is deployed on at least one node on the first blockchain.

In this application, the execution result of the first SC indicates whether the first SC is successfully executed.

If the first SC is successfully executed, the execution result includes the information about the second SC. Optionally, the execution result of the first SC further includes at least one of the following: an identifier of an SC that invokes the first SC, the identifier of the first SC, the information about the execution node of the first SC, the information about the verification node of the first SC, the information about the deployment node of the first SC, and a time or signature information (for example, information obtained by signing information included in the execution result of the first SC) for executing the first SC. For example, the execution result of the first SC includes the following content: <transaction source address: the identifier of the SC that invokes the first SC; transaction destination address: the identifier of the first SC; transaction content: the identifier of the first SC, the identifier of the second SC, the identifier of the blockchain on which the second SC is located, the information about the network function of the second SC, the time for executing the first SC, the information about the execution node of the first SC, the information about the verification node of the first SC, and the signature information>.

If the first SC fails to be executed, the execution result may indicate a failure cause.

Case 2: The first SC and the second SC are located on a same blockchain, but the first node is not an execution node of the first SC. The first node may query the execution node of the first SC (for example, the execution node of the first SC is the node 603 in FIG. 6), and send second invocation information to the execution node of the first SC. The second invocation information is the same as the first invocation information, or the second invocation information is determined based on the first invocation information. For example, further processing such as an operation like re-encapsulation, adding new information, or deleting information is performed on the first invocation information, to obtain the second invocation information. After receiving the second invocation information, the execution node of the first SC executes the first SC to obtain the information about the second SC, and sends the information about the second SC to the first node. The first node receives the information about the second SC, that is, obtains the information about the second SC.

Optionally, the execution node of the first SC may send the execution result of the first SC to a node on the first blockchain, to add the execution result to the chain. For details, refer to corresponding descriptions in case 1.

Case 3: The first SC and the second SC are located on different blockchains. After the first node determines that the first SC and the second SC are located on different blockchains, for example, the first node executes the first SC and discovers that the first SC and the second SC are located on different blockchains, or if the first node is not an execution node of the first SC, the first node determines, based on an indication of the execution node of the first SC, that the first SC and the second SC are located on different blockchains, the first node sends first cross-chain invocation information to a node on a fourth blockchain (for example, the node on the fourth blockchain is the node 604 in FIG. 6). The fourth blockchain is a blockchain on which a third SC and the second SC are located. The first cross-chain invocation information is used to invoke the third SC across chains, the third SC is used to discover the second SC, and the third SC and the second SC are located on a same blockchain. For example, the first cross-chain invocation information includes at least one of the following: the identifier of the second SC, the identifier of the second blockchain, the information about the first execution node, the information about the first verification node, the information about the first deployment node, or the information about the first network function. Optionally, the first cross-chain invocation information further includes information about the third SC.

If the node on the fourth blockchain is an execution node of the third SC, the node on the fourth blockchain executes the third SC to obtain the information about the second SC. Optionally, the node on the fourth blockchain may send an execution result of the third SC to another node on the fourth blockchain, to add the execution result to a chain. Specifically, refer to corresponding descriptions of "the first node may send an execution result of the first SC to a node on a first blockchain, to add the execution result to a chain" in case 1.

If the node on the fourth blockchain is not an execution node of the third SC, the node on the fourth blockchain may query the execution node of the third SC, and send third cross-chain invocation information to the execution node of the third SC. The third cross-chain invocation information is the same as the first cross-chain invocation information, or the third cross-chain invocation information is determined based on the first cross-chain invocation information. For example, further processing such as an operation like re-encapsulation, adding new information, or deleting information is performed on the first cross-chain invocation information, to obtain the third cross-chain invocation information. After receiving the third cross-chain invocation information, the execution node of the third SC executes the third SC to obtain the information about the second SC, and sends the information about the second SC to the node on the fourth blockchain. After receiving the information about the second SC, the node on the fourth blockchain sends the information about the second SC to the first node. The first node receives the information about the second SC, that is, obtains the information about the second SC.

Optionally, the execution node of the third SC may send the execution result of the third SC to one or more nodes on the fourth blockchain, to add the execution result to a chain. Specifically, refer to corresponding descriptions of "the first node may send an execution result of the first SC to a node on a first blockchain, to add the execution result to a chain" in case 1.

Optionally, after determining that the first SC and the second SC are located on different blockchains, the first node may send first indication information to the second node. The first indication information indicates that the first SC and the second SC are located on different blockchains. In this way, after receiving the first indication information, the second node may determine that the first SC and the second SC are located on different blockchains.

In a possible design, the first indication information includes information about the third SC. Content included in the information about the third SC is similar to content included in the information about the SC described above. Therefore, refer to the foregoing descriptions of the information about the SC. Details are not described again.

Optionally, the first node may send the information about the second SC to the second node. In this way, the second node may obtain the information about the second SC, facilitating invocation of the second SC. Therefore, the method shown in FIG. 8 further includes S803: The first node sends the information about the second SC to the second node. Correspondingly, the second node receives the information about the second SC from the first node. It may be understood that, for the foregoing case 1 and case 2, the information about the second SC may be included in the execution result of the first SC, that is, the first node may send the execution result of the first SC to the second node.

Based on the method shown in FIG. 8, the first node may discover the second SC by invoking the first SC, to obtain the information about the second SC. This helps learn of related information about the second SC, or helps invoke the second SC. Therefore, in the method shown in FIG. 8, an SC on a blockchain can be queried, to obtain related information about the SC. In the method shown in FIG. 8, the first SC may discover an SC on the blockchain on which the first SC is located. However, in specific application, this may not be limited. For example, the first SC may discover SCs on two or more blockchains, to expand a query range of the first SC, reduce a quantity of times of forwarding invocation information, and further shorten a query time.

In the method shown in FIG. 8, if the first SC and the second SC are located on different blockchains, the first node may invoke the third SC across chains, to obtain the information about the second SC. In addition to this manner, the first node may alternatively indicate, to the second node, that the first SC and the second SC are located on different blockchains, so that the second node initiates cross-chain invocation to obtain the information about the second SC. Specifically, refer to the following method shown in FIG. 9.

FIG. 9 shows another SC-based communication method according to this application. The method relates to an SC discovery process. The method may include the following steps.

S901: A second node sends first invocation information to a first node. Correspondingly, the first node receives the first invocation information from the second node.

It may be understood that for descriptions of S901, refer to the corresponding descriptions in S801. Details are not described again.

S902: The first node sends first indication information to the second node. Correspondingly, the second node receives the first indication information from the first node.

In a possible implementation, after the first node determines that a first SC and a second SC are located on different blockchains, for example, the first node executes the first SC and discovers that the first SC and the second SC are located on different blockchains, or if the first node is not an execution node of the first SC, the first node determines, based on an indication of the execution node of the first SC, that the first SC and the second SC are located on different blockchains, the first node sends the first indication information to the second node. For descriptions of the first indication information, refer to the corresponding descriptions in S802. Details are not described again.

S903: The second node sends second cross-chain invocation information to a node on a fourth blockchain. Correspondingly, the node on the fourth blockchain receives the second cross-chain invocation information from the second node.

In this application, the fourth blockchain is a blockchain on which a third SC and the second SC are located. The second cross-chain invocation information is used to invoke the third SC across chains, the third SC is used to discover the second SC, and the third SC and the second SC are located on a same blockchain. The second cross-chain invocation information includes at least one of the following: an identifier of the second SC, an identifier of a second blockchain, information about a first execution node, information about a first verification node, information about a first deployment node, or information about a first network function. Optionally, the second cross-chain invocation information further includes information about the third SC.

S904: The node on the fourth blockchain obtains information about the second SC based on the second cross-chain invocation information.

In a possible implementation, if the node on the fourth blockchain is an execution node of the third SC, the node on the fourth blockchain executes the third SC to obtain the information about the second SC.

Optionally, the node on the fourth blockchain may send an execution result of the third SC to another node on the fourth blockchain, to add the execution result to a chain. Specifically, refer to corresponding descriptions of "the first node may send an execution result of the first SC to a node on a first blockchain, to add the execution result to a chain" in case 1.

In another possible implementation, if the node on the fourth blockchain is not an execution node of the third SC, the node on the fourth blockchain may query the execution node of the third SC, and send fourth cross-chain invocation information to the execution node of the third SC. The fourth cross-chain invocation information is the same as the second cross-chain invocation information, or the fourth cross-chain invocation information is determined based on the second cross-chain invocation information. For example, further processing such as an operation like re-encapsulation, adding new information, or deleting information is performed on the second cross-chain invocation information, to obtain the fourth cross-chain invocation information. After receiving the fourth cross-chain invocation information, the execution node of the third SC executes the third SC to obtain the information about the second SC, and sends the information about the second SC to the node on the fourth blockchain. The node on the fourth blockchain receives the information about the second SC, that is, obtains the information about the second SC.

Optionally, the execution node of the third SC may send the execution result of the third SC to one or more nodes on the fourth blockchain, to add the execution result to a chain. Specifically, refer to corresponding descriptions of "the first node may send an execution result of the first SC to a node on a first blockchain, to add the execution result to a chain" in case 1.

S905: The node on the fourth blockchain sends the information about the second SC to the second node. Correspondingly, the second node receives the information about the second SC from the node on the fourth blockchain.

Based on the method shown in FIG. 9, the second node may invoke the third SC across chains, to discover the second SC, so as to obtain the information about the second SC. This helps learn of related information about the second SC, or helps invoke the second SC. Therefore, in the method shown in FIG. 9, an SC can be queried across blockchains, to obtain related information about the SC.

The method shown in FIG. 8 relates to a process of discovering SCs on a same blockchain, and the method shown in FIG. 9 relates to a process of discovering SCs on different blockchains. In a network resulting from the convergence of a blockchain network and a core network, nodes may further subscribe to a status of an SC, to obtain a latest status of the SC. Details are described below.

FIG. 10 shows another SC-based communication method according to this application. The method relates to an SC subscription process. The method may include the following steps.

S1001: A deployment node of a fifth SC monitors a first subscription event.

In this application, the deployment node of the fifth SC may be any node in the communication system 60 shown in FIG. 6, for example, the node 602.

In the method shown in FIG. 10 or FIG. 11 below, the deployment node of the fifth SC may be replaced with an execution node of the fifth SC or a verification node of the fifth SC. This is not limited. The first subscription event is set for the fifth SC to subscribe to a status of a fourth SC. The fifth SC and the fourth SC are located on a same blockchain. At least one of the fourth SC or the fifth SC has a network function of a core network. For example, the fifth SC has a network repository function. For descriptions of the network function of the core network, refer to the foregoing corresponding descriptions. Details are not described again.

Optionally, the deployment node of the fifth SC sets the first subscription event. For example, the deployment node of the fifth SC installs the first subscription event by using an LAF network element, or installs the first subscription event by using an SC that can implement an LAF function.

For example, the first subscription event includes an identifier of the fourth SC and a trigger condition of the first subscription event. Optionally, the first subscription event further includes at least one of the following: an identifier of a blockchain on which the fourth SC is located, information about a network function of the fourth SC, or an identifier of a blockchain on which the fifth SC is located.

It may be understood that the identifier of the fourth SC may enable the deployment node of the fifth SC to determine to subscribe to the status of the fourth SC. The identifier of the blockchain on which the fourth SC is located may enable the deployment node of the fifth SC to determine the blockchain on which the fourth SC is located. When maintaining a plurality of blockchains, the deployment node of the fifth SC may determine a specific blockchain to be monitored. The information about the network function of the fourth SC may enable the deployment node of the fifth SC to determine the network function of the fourth SC. When the first subscription event is triggered, a specific network function whose status changes may be determined. The identifier of the blockchain on which the fifth SC is located may enable the deployment node of the fifth SC to determine the blockchain on which the fifth SC is located. When maintaining a plurality of blockchains, the deployment node of the fifth SC may determine a specific blockchain on which an SC sets the first subscription event.

In a possible implementation, the trigger condition of the first subscription event includes: The fourth SC is updated, the fourth SC is canceled, the fourth SC is activated, or the fourth SC expires. In other words, the deployment node of the fifth SC may trigger the first subscription event when detecting that the fourth SC is updated, the fourth SC is canceled, the fourth SC is activated, or the fourth SC expires. It should be understood that the foregoing trigger condition is merely an example. In specific application, the trigger condition of the first subscription event may further include another condition. This is not limited.

It may be understood that, because the fifth SC and the fourth SC are located on a same blockchain, the deployment node of the fifth SC and a deployment node of the fourth SC share data, that is, any operation on the fourth SC may be added to a chain in a transaction manner, and the deployment node of the fifth SC may monitor a related transaction of the fourth SC based on the first subscription event. Therefore, the deployment node of the fifth SC may discover in time whether the first subscription event is triggered, that is, the deployment node of the fifth SC may discover in time whether the fourth SC is updated, the fourth SC is canceled, the fourth SC is activated, or the fourth SC expires.

S1002: When the first subscription event is triggered, the deployment node of the fifth SC obtains status information of the fourth SC.

It may be understood that when the first subscription event is triggered, the deployment node of the fifth SC may obtain the status information of the fourth SC based on transaction information on a chain.

In this application, the status information of the fourth SC includes information about the fourth SC or information about a change of the fourth SC. For example, if the fourth SC is updated, the status information of the fourth SC includes updated information about the fourth SC; if the fourth SC is canceled, the status information of the fourth SC indicates that the fourth SC is canceled; if the fourth SC is activated, the information about the fourth SC indicates that the fourth SC is activated; or if the fourth SC expires, the status information of the fourth SC indicates that the fourth SC expires.

Based on the method shown in FIG. 10, when the first subscription event is triggered, the deployment node of the fifth SC may obtain, in a timely manner, the status information of the fourth SC that is on the same blockchain as the fifth SC and to which the fifth SC subscribes, to obtain a latest status of the fourth SC, so as to facilitate subsequent invocation. Therefore, the method shown in FIG. 10 can implement SC subscription on a same blockchain.

It may be understood that, in specific application, in addition to a status of an SC on a same blockchain, a status of an SC on a different blockchain further needs to be subscribed to. Specifically, refer to the following method shown in FIG. 11.

FIG. 11 shows another SC-based communication method according to this application. The method relates to an SC subscription process. The method may include the following steps.

S1101: A deployment node of a fourth SC monitors a second subscription event.

In this application, the deployment node of the fourth SC may be any node in the communication system 60 shown in FIG. 6, for example, the node 603.

In the method shown in FIG. 11, the deployment node of the fourth SC may be replaced with an execution node of the fourth SC or a verification node of the fourth SC. This is not limited. The second subscription event is set for a fifth SC to subscribe to a status of the fourth SC. The fifth SC and the fourth SC are located on a same blockchain or different blockchains. At least one of the fourth SC or the fifth SC has a network function of a core network. For example, the fifth SC has a network repository function. For descriptions of the network function of the core network, refer to the foregoing corresponding descriptions. Details are not described again.

Optionally, the deployment node of the fourth SC sets the second subscription event. For example, the deployment node of the fourth SC installs the second subscription event by using an LAF network element, or installs the second subscription event by using an SC that can implement an LAF function.

For example, the second subscription event includes an identifier of the fifth SC and a trigger condition of the second subscription event. Optionally, the second subscription event further includes at least one of the following: an identifier of a blockchain on which the fifth SC is located, information about a network function of the fourth SC, or an identifier of a blockchain on which the fourth SC is located.

It may be understood that, the identifier of the fifth SC may enable the deployment node of the fourth SC to determine that the fifth SC subscribes to the status of the fourth SC. The identifier of the blockchain on which the fifth SC is located may enable the deployment node of the fourth SC to determine the blockchain on which the fifth SC is located. The information about the network function of the fourth SC may enable the deployment node of the fourth SC to determine the network function of the fourth SC. When the second subscription event is triggered, a specific network function whose status changes may be determined. The identifier of the blockchain on which the fourth SC is located may enable the deployment node of the fourth SC to determine the blockchain on which the fourth SC is located. When maintaining a plurality of blockchains, the deployment node of the fourth SC may determine a specific blockchain on which an SC sets the second subscription event.

In a possible implementation, the trigger condition of the second subscription event includes: The fourth SC is updated, the fourth SC is canceled, the fourth SC is activated, or the fourth SC expires. In other words, the deployment node of the fourth SC may trigger the second subscription event when detecting that the fourth SC is updated, the fourth SC is canceled, the fourth SC is activated, or the fourth SC expires. It should be understood that the foregoing trigger condition is merely an example. In specific application, the trigger condition of the second subscription event may further include another condition. This is not limited.

S1102: When the second subscription event is triggered, the deployment node of the fourth SC sends status information of the fourth SC to a deployment node of the fifth SC. Correspondingly, the deployment node of the fifth SC receives the status information of the fourth SC from the deployment node of the fourth SC.

For descriptions of the status information of the fourth SC, refer to the corresponding descriptions in S1002. Details are not described again.

Based on the method shown in FIG. 11, when the second subscription event is triggered, the deployment node of the fourth SC may send the status information of the fourth SC to the deployment node of the fifth SC, so that the deployment node of the fifth SC obtains a latest status of the fourth SC, to facilitate subsequent invocation. Therefore, the method shown in FIG. 11 can implement SC subscription on a same blockchain or SC subscription on a different blockchain.

The methods shown in FIG. 8 and FIG. 9 relate to an SC discovery process, and the methods shown in FIG. 10 and FIG. 11 relate to an SC subscription process. In a network resulting from the convergence of a blockchain network and a core network, nodes may further invoke mutual SCs to provide corresponding network functions. Details are described below.

FIG. 12 shows another SC-based communication method according to this application. The method relates to an SC invocation process. The method may include the following steps.

S1201: An execution node of a sixth SC determines third invocation information.

In this application, the execution node of the sixth SC may be any node in the communication system 60 shown in FIG. 6, for example, the node 602.

In this application, the third invocation information is used to invoke a seventh SC. The third invocation information includes first information. The first information is used to obtain access permission for the sixth SC to access the seventh SC. At least one of the sixth SC or the seventh SC has a network function of a core network. For descriptions of the network function of the core network, refer to the foregoing corresponding descriptions. Details are not described again. Optionally, the third invocation information further includes other information, for example, information about the seventh SC and/or information about the sixth SC.

In a possible design, the first information includes access permission information for the sixth SC to access the seventh SC; or the first information includes an identifier of a third blockchain, and access permission information for the sixth SC to access the seventh SC is stored in a node on the third blockchain. The access permission information for the sixth SC to access the seventh SC includes at least one of the following: a validity time for the sixth SC to access the seventh SC or access scope information for the sixth SC to access the seventh SC.

It may be understood that the seventh SC includes a plurality of functions or a plurality of segments of code, and the access scope information indicates a function or code that can be accessed by the sixth SC in the seventh SC, and/or indicates a function or code that cannot be accessed by the sixth SC in the seventh SC. Alternatively, the access scope information indicates that the sixth SC can access all content of the seventh SC, or indicates that the sixth SC cannot access the seventh SC.

S1202: The execution node of the sixth SC sends the third invocation information to an execution node of the seventh SC. Correspondingly, the execution node of the seventh SC receives the third invocation information from the execution node of the sixth SC.

In this application, the execution node of the seventh SC may be any node in the communication system 60 shown in FIG. 6, for example, the node 603.

S1203: The execution node of the seventh SC determines, based on the third invocation information, whether to execute the seventh SC.

In a possible implementation, if the first information includes the access permission information for the sixth SC to access the seventh SC, the execution node of the seventh SC determines, based on the access permission information, whether to execute the seventh SC.

For example, the access permission information includes the validity time for the sixth SC to access the seventh SC. If the validity time for the sixth SC to access the seventh SC expires, the execution node of the seventh SC determines not to execute the seventh SC; or if the validity time for the sixth SC to access the seventh SC does not expire, the execution node of the seventh SC determines to execute the seventh SC.

For example, the access permission information includes the access scope information for the sixth SC to access the seventh SC. If the access scope information indicates that the sixth SC can access all content of the seventh SC, the execution node of the seventh SC determines to execute the seventh SC. If the access scope information indicates that the sixth SC cannot access the seventh SC, the execution node of the seventh SC determines not to execute the seventh SC. If the access scope information indicates that a function 1 to a function 3 in the seventh SC can be accessed by the sixth SC, the execution node of the seventh SC determines to execute the function 1 to the function 3 in the seventh SC. If the seventh SC includes a function 1 to a function 6, and the access scope information indicates that the function 1 to the function 3 in the seventh SC cannot be accessed by the sixth SC, the execution node of the seventh SC determines to execute the function 4 to the function 6 in the seventh SC.

For example, the access permission information includes the validity time for the sixth SC to access the seventh SC and the access scope information for the sixth SC to access the seventh SC. If the validity time for the sixth SC to access the seventh SC expires, the execution node of the seventh SC determines not to execute the seventh SC. If the validity time for the sixth SC to access the seventh SC does not expire, and the access scope information indicates that the sixth SC can access all content of the seventh SC, the execution node of the seventh SC determines to execute the seventh SC.

In another possible implementation, if the first information includes the identifier of the third blockchain, the execution node of the seventh SC obtains, from a node on the third blockchain, the access permission information for the sixth SC to access the seventh SC. For example, the execution node of the seventh SC sends query information to the node on the third blockchain. The query information is used to query the access permission for the sixth SC to access the seventh SC, and the query information may include an identifier of the sixth SC and an identifier of the seventh SC. After receiving the query information, the node on the third blockchain obtains the access permission information based on the identifier of the sixth SC and the identifier of the seventh SC, and sends a query result to the execution node of the seventh SC. The query result includes the access permission information. After receiving the query result, the execution node of the seventh SC determines, based on the query result, whether to execute the seventh SC.

It may be understood that if the execution node of the seventh SC determines to execute the seventh SC, the execution node of the seventh SC executes the seventh SC to obtain an execution result of the seventh SC. Subsequently, the execution node of the seventh SC may send the execution result to the execution node of the sixth SC. The execution node of the seventh SC may further send the execution result to a node on the blockchain on which the seventh SC is located.

Optionally, if the execution node of the seventh SC determines not to execute the seventh SC, the execution node of the seventh SC sends, to the execution node of the sixth SC, indication information indicating that the seventh SC is not executed.

Based on the method shown in FIG. 12, when the seventh SC is invoked, the execution node of the seventh SC may determine whether the sixth SC that invokes the seventh SC has access permission, to improve communication security.

It may be understood that, in addition to the foregoing method, in a network resulting from the convergence of a blockchain network and a core network, nodes may further request SC authorization, to facilitate invocation between SCs. The following provides specific descriptions.

FIG. 13 shows another SC-based communication method according to this application. The method relates to an SC authorization process. The method may include the following steps.

S1301: An execution node of a sixth SC sends fourth invocation information to an execution node of an eighth SC. Correspondingly, the execution node of the eighth SC receives the fourth invocation information from the execution node of the sixth SC.

In this application, the execution node of the eighth SC may be any node in the communication system 60 shown in FIG. 6, for example, the node 604.

In this application, the fourth invocation information is used to invoke the eighth SC, and the eighth SC is used to determine access permission for the sixth SC to access a seventh SC. Optionally, the eighth SC has a network function of a core network. For example, the eighth SC has a network repository function. For the network function of the core network, refer to the foregoing corresponding descriptions. Details are not described again.

In a possible design, the fourth invocation information includes an identifier of the sixth SC and an identifier of the seventh SC, so that the execution node of the eighth SC determines an SC that requests authorization (that is, the sixth SC) and an SC that is requested to be accessed (that is, the seventh SC).

Optionally, the fourth invocation information further includes at least one of the following: an identifier of a blockchain on which the sixth SC is located, information about a home location of the sixth SC, information about an access location of the sixth SC, or an identifier of a blockchain on which the seventh SC is located. The information about the home location of the sixth SC may indicate a public land mobile network (public land mobile network, PLMN) of the sixth SC. For example, the information about the home location of the sixth SC includes an identifier of the PLMN of the sixth SC. The information about the access location of the sixth SC indicates a PLMN of the seventh SC that the sixth SC is to access. For example, the information about the access location of the sixth SC includes an identifier of the PLMN of the seventh SC.

It may be understood that the identifier of the blockchain on which the sixth SC is located is used by the execution node of the eighth SC to determine the blockchain on which the sixth SC is located, and then determine, based on the blockchain, whether to authorize the sixth SC to access the seventh SC. The information about the home location of the sixth SC is used by the execution node of the eighth SC to determine the home location of the sixth SC, and then determine, with reference to the home location, whether to authorize the sixth SC to access the seventh SC. The information about the access location of the sixth SC is used by the execution node of the eighth SC to determine the access location of the sixth SC, and then determine, with reference to the home location, whether to authorize the sixth SC to access the seventh SC. The identifier of the blockchain on which the seventh SC is located is used by the execution node of the eighth SC to determine the blockchain on which the seventh SC is located, and then determine, based on the blockchain, whether to authorize the sixth SC to access the seventh SC. In conclusion, the execution node of the eighth SC may determine, based on a plurality of types of information, whether to authorize the sixth SC to access the seventh SC, to adapt to various scenarios.

S1302: The execution node of the eighth SC executes the eighth SC to obtain access permission information for the sixth SC to access the seventh SC.

It may be understood that the execution node of the eighth SC may store policy information used to determine the access permission information, or the execution node of the eighth SC obtains the policy information from another node. The eighth SC may obtain, based on the policy information, the access permission information for the sixth SC to access the seventh SC.

In a possible design, the policy information includes at least one of the following: an identifier of a blockchain that can access the seventh SC, an identifier of a blockchain that cannot access the seventh SC, an identifier of an SC that can access the seventh SC, an identifier of an SC that cannot access the seventh SC, an identifier of a PLMN that can access the seventh SC, or an identifier of a PLMN that cannot access the seventh SC.

For example, the fourth invocation information includes the identifier of the sixth SC, the identifier of the seventh SC, and the identifier of the blockchain on which the sixth SC is located, and the policy information includes the identifier of the blockchain that can access the seventh SC. If the identifier of the blockchain on which the sixth SC is located is included in the identifier of the blockchain that can access the seventh SC, the sixth SC can access the seventh SC. If the identifier of the blockchain on which the sixth SC is located is not included in the identifier of the blockchain that can access the seventh SC, the sixth SC cannot access the seventh SC.

For example, the fourth invocation information includes the identifier of the sixth SC, the identifier of the seventh SC, and the information about the home location of the sixth SC, and the policy information includes the identifier of the PLMN that can access the seventh SC. If an identifier of a PLMN indicated by the information about the home location of the sixth SC is included in the identifier of the PLMN that can access the seventh SC, the sixth SC can access the seventh SC. If an identifier of a PLMN indicated by the information about the home location of the sixth SC is not included in the identifier of the PLMN that can access the seventh SC, the sixth SC cannot access the seventh SC.

For example, the fourth invocation information includes the identifier of the sixth SC, the identifier of the seventh SC, and the information about the home location of the sixth SC, and the policy information includes the identifier of the SC that can access the seventh SC and the identifier of the PLMN that cannot access the seventh SC. If the identifier of the sixth SC is included in the identifier of the SC that can access the seventh SC, and an identifier of a PLMN indicated by the information about the home location of the sixth SC is not included in the identifier of the PLMN that cannot access the seventh SC, the sixth SC can access the seventh SC. If the identifier of the sixth SC is not included in the identifier of the SC that can access the seventh SC, the sixth SC cannot access the seventh SC. If an identifier of a PLMN indicated by the information about the home location of the sixth SC is included in the identifier of the PLMN that cannot access the seventh SC, the sixth SC cannot access the seventh SC.

Optionally, the execution node of the eighth SC sends an execution result of the eighth SC to another node on a third blockchain, to add the execution result to a chain, so that the execution result of the eighth SC can be recorded on the third blockchain in a form of transaction, thereby facilitating tracing. The third blockchain is a blockchain on which the eighth SC is located. It may be understood that the execution result of the eighth SC includes the access permission information for the sixth SC to access the seventh SC.

S1303: The execution node of the eighth SC sends first information to the execution node of the sixth SC. Correspondingly, the execution node of the sixth SC receives the first information from the execution node of the eighth SC.

It may be understood that, if the execution node of the eighth SC determines that the sixth SC cannot access the seventh SC, the execution node of the eighth SC sends, to the execution node of the sixth SC, indication information indicating that the sixth SC cannot access the seventh SC.

Based on the method shown in FIG. 13, the sixth SC may obtain, by invoking the eighth SC, the permission for the sixth SC to access the seventh SC, so that the sixth SC invokes the seventh SC.

In the method shown in FIG. 13, the execution node of the sixth SC requests, by invoking the SC, the access permission for the sixth SC to access the seventh SC. In addition to the foregoing method, the execution node of the sixth SC may alternatively directly send a request to an authorization node, to request the access permission for the sixth SC to access the seventh SC. The authorization node has a function of determining permission for one SC to access another SC. For example, the execution node of the sixth SC sends a first request to the authorization node. The first request is used to request the access permission for the sixth SC to access the seventh SC. After receiving the first request, the authorization node determines the first information, and sends the first information to the execution node of the sixth SC. In this scenario, the third blockchain is a blockchain on which the authorization node is located. It may be understood that the authorization node does not determine, by executing the SC, the access permission for the sixth SC to access the seventh SC, but logic for determining the permission by the authorization node may be the same as logic for determining the permission by the eighth SC. For example, the authorization node stores the foregoing policy information, or obtains the foregoing policy information from another node. After receiving the first request, the authorization node queries the policy information to obtain the access permission for the sixth SC to access the seventh SC.

Embodiments mentioned above in this application may be combined when the solutions do not conflict. This is not limited.

For example, FIG. 8 to FIG. 13 show methods provided in this application, and these methods may be combined with each other. For example, the eighth SC may be first discovered by using the method shown in FIG. 8, and then the method shown in FIG. 13 is performed; or the method shown in FIG. 13 is first performed to obtain the first information, and then the method shown in FIG. 12 is performed, to invoke the seventh SC based on the first information; or the fourth SC may be first discovered by using the method shown in FIG. 8, and then the method shown in FIG. 10 or FIG. 11 is performed; or in a process of performing the method shown in FIG. 12 or FIG. 13, the method shown in FIG. 10 or FIG. 11 is performed, so that the sixth SC obtains the status information of the seventh SC. It may be understood that the foregoing is merely an example of a combination of these methods, and in specific application, these combination manners set no limitation.

The foregoing mainly describes the solutions provided in this application from a perspective of interaction between nodes. Correspondingly, this application further provides a communication apparatus. The communication apparatus may be a node (for example, the first node, the second node, the deployment node of the fifth SC, the deployment node of the fourth SC, the execution node of the sixth SC, the execution node of the seventh SC, or the execution node of the eighth SC) in the foregoing method embodiments, or an apparatus including the node, or a component that can be used in the node. It may be understood that to implement the foregoing functions, the node includes corresponding hardware structures and/or software modules for performing the functions. A person skilled in the art should be easily aware that, with reference to the example units and algorithm operations described in the embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this application, the node may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It may be understood that division into the modules in this application is an example, and is merely logical function division. During actual implementation, there may be another division manner.

For example, when each functional module is obtained through division in an integrated manner, FIG. 14 is a diagram of a structure of a communication apparatus 140. The communication apparatus 140 includes a processing module 1401. Optionally, the communication apparatus 140 further includes an interface module 1402. The processing module 1401 may also be referred to as a processing unit, and is configured to perform an operation other than a sending operation and a receiving operation. For example, the processing module may be a processing circuit or a processor. The interface module 1402 may also be referred to as an interface unit, and is configured to perform a sending operation and a receiving operation. For example, the interface module may be an interface circuit, a transceiver machine, a transceiver, or a communication interface.

In some embodiments, the communication apparatus 140 may further include a storage module (not shown in FIG. 14), configured to store program instructions and data.

For example, the communication apparatus 140 is configured to implement a function of a first node. For example, the communication apparatus 140 is the first node in the embodiment shown in FIG. 8 or the embodiment shown in FIG. 9.

The processing module 1401 is configured to obtain first invocation information. The first invocation information is used to invoke a first smart contract, the first smart contract is used to discover a second smart contract, and the second smart contract has a network function of a core network. For example, the processing module 1401 may be configured to perform S801.

The processing module 1401 is further configured to obtain information about the second smart contract based on the first invocation information. For example, the processing module 1401 may be configured to perform S802.

In a possible implementation, the processing module 1401 is specifically configured to execute the first smart contract to obtain the information about the second smart contract.

In a possible implementation, the interface module 1402 is configured to send an execution result of the first smart contract to a node on a first blockchain, where the first smart contract is deployed on the first blockchain.

In a possible implementation, the processing module 1401 is specifically configured to send second invocation information to an execution node of the first smart contract through the interface module 1402, where the second invocation information is determined based on the first invocation information; and the processing module 1401 is further specifically configured to receive the information about the second smart contract through the interface module 1402.

In a possible implementation, the processing module 1401 is specifically configured to determine that the first smart contract and the second smart contract are located on different blockchains; the processing module 1401 is further specifically configured to send first cross-chain invocation information through the interface module 1402, where the first cross-chain invocation information is used to invoke a third smart contract across chains, the third smart contract is used to discover the second smart contract, and the third smart contract and the second smart contract are located on a same blockchain; and the processing module 1401 is further specifically configured to receive the information about the second smart contract through the interface module 1402.

In a possible implementation, the interface module 1402 is further configured to send first indication information, where the first indication information indicates that the first smart contract and the second smart contract are located on different blockchains.

In a possible implementation, the first invocation information includes at least one of the following: an identifier of the second smart contract, an identifier of a second blockchain, information about a first execution node, information about a first verification node, information about a first deployment node, or information about a first network function.

In a possible implementation, the information about the second smart contract includes at least one of the following: an identifier of a blockchain on which the second smart contract is located or the identifier of the second smart contract.

In a possible implementation, the information about the second smart contract further includes at least one of the following: information about a verification node of the second smart contract, information about an execution node of the second smart contract, information about a deployment node of the second smart contract, key information of the second smart contract, token access manner information of the second smart contract, version identification information of the second smart contract, an input parameter of the network function of the second smart contract, or information about the network function of the second smart contract.

In a possible implementation, the interface module 1402 is further configured to send the information about the second smart contract.

In a possible implementation, the network function of the core network is configured to provide at least one of the following services: a subscription service, an authentication service, a registration service, a mobility management service, a policy management service, a data processing service, a charging service, a session management service, a computing service, a sensing service, or an artificial intelligence service.

In a possible implementation, the network function of the core network includes at least one of the following: an access function, a mobility management function, a network repository function, unified data management, an authentication server function, a session management function, a user plane function, a policy control function, a network exposure function, a computing plane function, a data plane function, or a smart plane function.

When the communication apparatus 140 is configured to implement the function of the first node, for another function that can be implemented by the communication apparatus 140, refer to the related descriptions of the embodiment shown in FIG. 8 or the embodiment shown in FIG. 9. Details are not described again.

Alternatively, for example, the communication apparatus 140 is configured to implement a function of a second node. For example, the communication apparatus 140 is the second node in the embodiment shown in FIG. 8 or the embodiment shown in FIG. 9.

The interface module 1402 is configured to send first invocation information, where the first invocation information is used to invoke a first smart contract, the first smart contract is used to discover a second smart contract, and the second smart contract has a network function of a core network. For example, the interface module 1402 may be configured to perform S901.

The interface module 1402 is further configured to receive information about the second smart contract. For example, the interface module 1402 may be configured to perform S905.

In a possible implementation, the first invocation information includes at least one of the following: an identifier of the second smart contract, an identifier of a second blockchain, information about a first execution node, information about a first verification node, information about a first deployment node, or information about a first network function.

In a possible implementation, the information about the second smart contract includes at least one of the following: an identifier of a blockchain on which the second smart contract is located or the identifier of the second smart contract.

In a possible implementation, the information about the second smart contract further includes at least one of the following: information about a verification node of the second smart contract, information about an execution node of the second smart contract, information about a deployment node of the second smart contract, key information of the second smart contract, token access manner information of the second smart contract, version identification information of the second smart contract, an input parameter of the network function of the second smart contract, or information about the network function of the second smart contract.

In a possible implementation, the interface module 1402 is further configured to receive first indication information, where the first indication information indicates that the first smart contract and the second smart contract are located on different blockchains; and the interface module 1402 is further configured to send second cross-chain invocation information, where the second cross-chain invocation information is used to invoke a third smart contract across chains, the third smart contract is used to discover the second smart contract, and the third smart contract and the second smart contract are located on a same blockchain.

In a possible implementation, the first indication information includes information about the third smart contract.

In a possible implementation, the network function of the core network is configured to provide at least one of the following services: a subscription service, an authentication service, a registration service, a mobility management service, a policy management service, a data processing service, a charging service, a session management service, a computing service, a sensing service, or an artificial intelligence service.

In a possible implementation, the network function of the core network includes at least one of the following: an access function, a mobility management function, a network repository function, unified data management, an authentication server function, a session management function, a user plane function, a policy control function, a network exposure function, a computing plane function, a data plane function, or a smart plane function.

When the communication apparatus 140 is configured to implement the function of the second node, for another function that can be implemented by the communication apparatus 140, refer to the related descriptions of the embodiment shown in FIG. 8 or the embodiment shown in FIG. 9. Details are not described again.

Alternatively, for example, the communication apparatus 140 is configured to implement a function of a deployment node of a fifth smart contract. For example, the communication apparatus 140 is the deployment node of the fifth smart contract in the embodiment shown in FIG. 10.

The processing module 1401 is configured to monitor a first subscription event. For example, the processing module 1401 is configured to perform S1001.

The processing module 1401 is further configured to obtain status information of a fourth smart contract when the first subscription event is triggered. At least one of the fourth smart contract or the fifth smart contract has a network function of a core network. For example, the processing module 1401 is further configured to perform S1002.

In a possible implementation, the processing module 1401 is further configured to set the first subscription event.

In a possible implementation, a trigger condition of the first subscription event includes: The fourth smart contract is updated, the fourth smart contract is canceled, the fourth smart contract is activated, or the fourth smart contract expires.

In a possible implementation, the network function of the core network is configured to provide at least one of the following services: a subscription service, an authentication service, a registration service, a mobility management service, a policy management service, a data processing service, a charging service, a session management service, a computing service, a sensing service, or an artificial intelligence service.

In a possible implementation, the network function of the core network includes at least one of the following: an access function, a mobility management function, a network repository function, unified data management, an authentication server function, a session management function, a user plane function, a policy control function, a network exposure function, a computing plane function, a data plane function, or a smart plane function.

When the communication apparatus 140 is configured to implement the function of the deployment node of the fifth smart contract, for another function that can be implemented by the communication apparatus 140, refer to related descriptions of the embodiment shown in FIG. 10. Details are not described again.

Alternatively, for example, the communication apparatus 140 is configured to implement a function of a deployment node of a fourth smart contract. For example, the communication apparatus 140 is the deployment node of the fourth smart contract in the embodiment shown in FIG. 11.

The processing module 1401 is configured to monitor a second subscription event. For example, the processing module 1401 is configured to perform S1101.

The interface module 1402 is configured to send status information of the fourth smart contract to a deployment node of a fifth smart contract when the second subscription event is triggered. The fifth smart contract subscribes to the fourth smart contract, and at least one of the fourth smart contract or the fifth smart contract has a network function of a core network. For example, the interface module 1402 is further configured to perform S1102.

In a possible implementation, the processing module 1401 is further configured to set the second subscription event.

In a possible implementation, a trigger condition of the second subscription event includes: The fourth smart contract is updated, the fourth smart contract is canceled, the fourth smart contract is activated, or the fourth smart contract expires.

In a possible implementation, the network function of the core network is configured to provide at least one of the following services: a subscription service, an authentication service, a registration service, a mobility management service, a policy management service, a data processing service, a charging service, a session management service, a computing service, a sensing service, or an artificial intelligence service.

In a possible implementation, the network function of the core network includes at least one of the following: an access function, a mobility management function, a network repository function, unified data management, an authentication server function, a session management function, a user plane function, a policy control function, a network exposure function, a computing plane function, a data plane function, or a smart plane function.

When the communication apparatus 140 is configured to implement the function of the deployment node of the fourth smart contract, for another function that can be implemented by the communication apparatus 140, refer to related descriptions of the embodiment shown in FIG. 11. Details are not described again.

Alternatively, for example, the communication apparatus 140 is configured to implement a function of an execution node of a sixth smart contract. For example, the communication apparatus 140 is the execution node of the sixth smart contract in the embodiment shown in FIG. 12 or the embodiment shown in FIG. 13.

The processing module 1401 is configured to determine third invocation information. The third invocation information is used to invoke a seventh smart contract, the third invocation information includes first information, the first information is used to obtain access permission for the sixth smart contract to access the seventh smart contract, and at least one of the sixth smart contract or the seventh smart contract has a network function of a core network. For example, the processing module 1401 is configured to perform S1201.

The interface module 1402 is configured to send third invocation information. For example, the interface module 1402 is configured to perform S1202.

In a possible implementation, the first information includes access permission information for the sixth smart contract to access the seventh smart contract; or the first information includes an identifier of a third blockchain, and access permission information for the sixth smart contract to access the seventh smart contract is stored in a node on the third blockchain.

In a possible implementation, the access permission information includes at least one of the following: a validity time for the sixth smart contract to access the seventh smart contract, or access scope information for the sixth smart contract to access the seventh smart contract.

In a possible implementation, the interface module 1402 is further configured to send fourth invocation information, where the fourth invocation information is used to invoke an eighth smart contract, and the eighth smart contract is used to determine the access permission for the sixth smart contract to access the seventh smart contract; and the interface module 1402 is further configured to receive the first information.

In a possible implementation, the fourth invocation information includes an identifier of the sixth smart contract and an identifier of the seventh smart contract.

In a possible implementation, the fourth invocation information further includes at least one of the following: an identifier of a blockchain on which the sixth smart contract is located, information about a home location of the sixth smart contract, information about an access location of the sixth smart contract, or an identifier of a blockchain on which the seventh smart contract is located.

In a possible implementation, the interface module 1402 is further configured to send a first request, where the first request is used to request the access permission for the sixth smart contract to access the seventh smart contract; and the interface module 1402 is further configured to receive the first information.

In a possible implementation, the network function of the core network is configured to provide at least one of the following services: a subscription service, an authentication service, a registration service, a mobility management service, a policy management service, a data processing service, a charging service, a session management service, a computing service, a sensing service, or an artificial intelligence service.

In a possible implementation, the network function of the core network includes at least one of the following: an access function, a mobility management function, a network repository function, unified data management, an authentication server function, a session management function, a user plane function, a policy control function, a network exposure function, a computing plane function, a data plane function, or a smart plane function.

When the communication apparatus 140 is configured to implement the function of the execution node of the sixth smart contract, for another function that can be implemented by the communication apparatus 140, refer to related descriptions of the embodiment shown in FIG. 12 or the embodiment shown in FIG. 13. Details are not described again.

Alternatively, for example, the communication apparatus 140 is configured to implement a function of an execution node of an eighth smart contract. For example, the communication apparatus 140 is the execution node of the eighth smart contract in the embodiment shown in FIG. 13.

The interface module 1402 is configured to receive fourth invocation information. The fourth invocation information is used to invoke the eighth smart contract. For example, the interface module 1402 is configured to perform S1301.

The processing module 1401 is configured to execute the eighth smart contract to obtain access permission information for a sixth smart contract to access a seventh smart contract. At least one of the sixth smart contract, the seventh smart contract, or the eighth smart contract has a network function of a core network. For example, the processing module 1401 is configured to perform S1302.

The interface module 1402 is further configured to send first information, where the first information is used to obtain access permission for the sixth smart contract to access the seventh smart contract. For example, the interface module 1402 is further configured to perform S1303.

In a possible implementation, the first information includes the access permission information; or the first information includes an identifier of a third blockchain, and the access permission information is stored in a node on the third blockchain.

In a possible implementation, the access permission information includes at least one of the following: a validity time for the sixth smart contract to access the seventh smart contract, or access scope information for the sixth smart contract to access the seventh smart contract.

In a possible implementation, the interface module 1402 is further configured to send an execution result of the eighth smart contract to a node on a blockchain on which the eighth smart contract is located.

In a possible implementation, the network function of the core network is configured to provide at least one of the following services: a subscription service, an authentication service, a registration service, a mobility management service, a policy management service, a data processing service, a charging service, a session management service, a computing service, a sensing service, or an artificial intelligence service.

In a possible implementation, the network function of the core network includes at least one of the following: an access function, a mobility management function, a network repository function, unified data management, an authentication server function, a session management function, a user plane function, a policy control function, a network exposure function, a computing plane function, a data plane function, or a smart plane function.

When the communication apparatus 140 is configured to implement the function of the execution node of the eighth smart contract, for another function that can be implemented by the communication apparatus 140, refer to related descriptions of the embodiment shown in FIG. 13. Details are not described again.

Alternatively, for example, the communication apparatus 140 is configured to implement a function of an execution node of a seventh smart contract. For example, the communication apparatus 140 is the execution node of the seventh smart contract in the embodiment shown in FIG. 12.

The interface module 1402 is configured to receive third invocation information. The third invocation information is used to invoke the seventh smart contract, the third invocation information includes first information, the first information is used to obtain access permission for a sixth smart contract to access the seventh smart contract, and at least one of the sixth smart contract or the seventh smart contract has a network function of a core network. For example, the interface module 1402 is configured to perform S1202.

The processing module 1401 is configured to determine, based on the third invocation information, whether to execute the seventh smart contract. For example, the processing module 1401 is configured to perform S1203.

In a possible implementation, the first information includes access permission information for the sixth smart contract to access the seventh smart contract; or the first information includes an identifier of a third blockchain, and access permission information for the sixth smart contract to access the seventh smart contract is stored in the third blockchain.

In a possible implementation, the first information includes the access permission information for the sixth smart contract to access the seventh smart contract; and the processing module 1401 is specifically configured to determine, based on the access permission information, whether to execute the seventh smart contract.

In a possible implementation, the first information includes an identifier of a third blockchain; the processing module 1401 is specifically configured to send query information to a node on the third blockchain through the interface module 1402, where the query information is used to query the access permission for the sixth smart contract to access the seventh smart contract; the processing module 1401 is further specifically configured to receive a query result through the interface module 1402; and the processing module 1401 is further specifically configured to determine, based on the query result, whether to execute the seventh smart contract.

In a possible implementation, the network function of the core network is configured to provide at least one of the following services: a subscription service, an authentication service, a registration service, a mobility management service, a policy management service, a data processing service, a charging service, a session management service, a computing service, a sensing service, or an artificial intelligence service.

In a possible implementation, the network function of the core network includes at least one of the following: an access function, a mobility management function, a network repository function, unified data management, an authentication server function, a session management function, a user plane function, a policy control function, a network exposure function, a computing plane function, a data plane function, or a smart plane function.

When the communication apparatus 140 is configured to implement the function of the execution node of the seventh smart contract, for another function that can be implemented by the communication apparatus 140, refer to related descriptions of the embodiment shown in FIG. 12. Details are not described again.

In a simple embodiment, a person skilled in the art may figure out that the communication apparatus 140 may be in the form shown in FIG. 7. For example, the processor 701 in FIG. 7 may invoke the computer-executable instructions stored in the memory 703, to enable the communication apparatus 140 to perform the method in the foregoing method embodiments.

For example, functions/implementation processes of the processing module 1401 and the interface module 1402 in FIG. 14 may be implemented by invoking, by the processor 701 in FIG. 7, the computer-executable instructions stored in the memory 703. Alternatively, a function/an implementation process of the processing module 1401 in FIG. 14 may be implemented by invoking, by the processor 701 in FIG. 7, the computer-executable instructions stored in the memory 703, and a function/an implementation process of the interface module 1402 in FIG. 14 may be implemented by using the communication interface 704 in FIG. 7.

It may be understood that one or more of the foregoing modules or units may be implemented by using software, hardware, or a combination thereof. When any one of the foregoing modules or units is implemented by using software, the software exists in a form of computer program instructions, and is stored in the memory. The processor may be configured to execute the program instructions and implement the foregoing method procedure. The processor may be built in a SoC (system on chip) or an ASIC, or may be an independent semiconductor chip. In addition to the core configured to perform operation or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, this application further provides a chip system, including at least one processor and an interface. The at least one processor is coupled to a memory through the interface, and when the at least one processor executes a computer program or instructions in the memory, the method in any one of the foregoing method embodiments is performed. In a possible implementation, the chip system further includes a memory. Optionally, the chip system may include a chip, or may include a chip and another discrete component. This is not specifically limited in this application.

Optionally, this application further provides a computer-readable storage medium. All or some procedures in the foregoing method embodiments may be implemented by a computer program instructing related hardware. The program may be stored in the foregoing computer-readable storage medium. When the program is executed, the procedures in the foregoing method embodiments may be included. The computer-readable storage medium may be an internal storage unit of the communication apparatus in any one of the foregoing embodiments, for example, a hard disk or a memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) that is configured on the communication apparatus. Further, the computer-readable storage medium may include both an internal storage unit and an external storage device of the communication apparatus. The computer-readable storage medium is configured to store the computer program and store other programs and data that are required by the communication apparatus. The computer-readable storage medium may be further configured to temporarily store data that has been output or is to be output.

Optionally, this application further provides a computer program product. All or some procedures in the foregoing method embodiments may be implemented by a computer program instructing related hardware. The program may be stored in the foregoing computer program product. When the program is executed, the procedures in the foregoing method embodiments may be included.

Optionally, this application further provides computer instructions. All or some procedures in the foregoing method embodiments may be implemented by the computer instructions instructing related hardware (such as a computer or a processor). The program may be stored in the foregoing computer-readable storage medium or the foregoing computer program product.

Optionally, this application further provides a communication system, including the first node and the second node in the foregoing embodiments.

Optionally, this application further provides a communication system, including the execution node of the sixth smart contract and the execution node of the seventh smart contract in the foregoing embodiments. Optionally, the communication system further includes the execution node of the eighth smart contract in the foregoing embodiments.

Optionally, this application further provides a communication system, including the execution node of the sixth smart contract and the execution node of the eighth smart contract in the foregoing embodiments.

It may be clearly learned by a person skilled in the art from the foregoing description of the implementations that, for convenience and brevity of description, division into only the foregoing functional modules is used as an example for description. In actual application, the foregoing functions may be allocated to different functional modules for implementation according to a requirement, that is, an internal structure of an apparatus is divided into different functional modules, to complete all or some of the functions described above.

In the several embodiments provided in this application, it should be understood that the disclosed apparatus and method may be implemented in other manners. For example, the described apparatus embodiments are merely examples. For example, division into the modules or units is merely logical function division. In actual implementation, there may be another division manner. For example, a plurality of units or components may be combined or integrated into another apparatus, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may be one or more physical units, may be located in one place, or may be distributed in a plurality of different places. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

The foregoing descriptions are merely specific implementations of this application. However, the protection scope of this application is not limited thereto. Any change or replacement within the technical scope disclosed in this application shall fall within the protection scope of this application. Therefore, the protection scope of this application shall be subject to the protection scope of the claims.

## Claims

1. A smart contract-based communication method, wherein the method comprises:
obtaining first invocation information, wherein the first invocation information is used to invoke a first smart contract, the first smart contract is used to discover a second smart contract, and the second smart contract has a network function of a core network; and
obtaining information about the second smart contract based on the first invocation information.

2. The method according to claim 1, wherein the obtaining the information about the second smart contract based on the first invocation information comprises:
executing the first smart contract to obtain the information about the second smart contract.

3. The method according to claim 2, wherein the method further comprises:
sending an execution result of the first smart contract to a node on a first blockchain, wherein the first smart contract is deployed on the first blockchain.

4. The method according to claim 1, wherein the obtaining the information about the second smart contract based on the first invocation information comprises:
sending second invocation information to an execution node of the first smart contract, wherein the second invocation information is determined based on the first invocation information; and
receiving the information about the second smart contract.

5. The method according to claim 1, wherein the obtaining the information about the second smart contract based on the first invocation information comprises:
determining that the first smart contract and the second smart contract are located on different blockchains;
sending first cross-chain invocation information, wherein the first cross-chain invocation information is used to invoke a third smart contract across chains, the third smart contract is used to discover the second smart contract, and the third smart contract and the second smart contract are located on a same blockchain; and
receiving the information about the second smart contract.

6. The method according to claim 1 or 5, wherein the method further comprises:
sending first indication information, wherein the first indication information indicates that the first smart contract and the second smart contract are located on different blockchains.

7. The method according to any one of claims 1 to 6, wherein the first invocation information comprises at least one of the following: an identifier of the second smart contract, an identifier of a second blockchain, information about a first execution node, information about a first verification node, information about a first deployment node, or information about a first network function.

8. The method according to any one of claims 1 to 7, wherein the information about the second smart contract comprises at least one of the following: an identifier of a blockchain on which the second smart contract is located or the identifier of the second smart contract.

9. The method according to claim 8, wherein the information about the second smart contract further comprises at least one of the following: information about a verification node of the second smart contract, information about an execution node of the second smart contract, information about a deployment node of the second smart contract, key information of the second smart contract, token access manner information of the second smart contract, version identification information of the second smart contract, an input parameter of the network function of the second smart contract, or information about the network function of the second smart contract.

10. The method according to any one of claims 1 to 9, wherein the method further comprises:
sending the information about the second smart contract.

11. A smart contract-based communication method, wherein the method comprises:
sending first invocation information, wherein the first invocation information is used to invoke a first smart contract, the first smart contract is used to discover a second smart contract, and the second smart contract has a network function of a core network; and
receiving information about the second smart contract.

12. The method according to claim 11, wherein the first invocation information comprises at least one of the following: an identifier of the second smart contract, an identifier of a second blockchain, information about a first execution node, information about a first verification node, information about a first deployment node, or information about a first network function.

13. The method according to claim 11 or 12, wherein the information about the second smart contract comprises at least one of the following: an identifier of a blockchain on which the second smart contract is located or the identifier of the second smart contract.

14. The method according to claim 13, wherein the information about the second smart contract further comprises at least one of the following: information about a verification node of the second smart contract, information about an execution node of the second smart contract, information about a deployment node of the second smart contract, key information of the second smart contract, token access manner information of the second smart contract, version identification information of the second smart contract, an input parameter of the network function of the second smart contract, or information about the network function of the second smart contract.

15. The method according to any one of claims 11 to 14, wherein the method further comprises:
receiving first indication information, wherein the first indication information indicates that the first smart contract and the second smart contract are located on different blockchains; and
sending second cross-chain invocation information, wherein the second cross-chain invocation information is used to invoke a third smart contract across chains, the third smart contract is used to discover the second smart contract, and the third smart contract and the second smart contract are located on a same blockchain.

16. The method according to claim 15, wherein the first indication information comprises information about the third smart contract.

17. A smart contract-based communication method, wherein the method comprises:
monitoring, by a deployment node of a fifth smart contract, a first subscription event; and
obtaining, by the deployment node of the fifth smart contract, status information of a fourth smart contract when the first subscription event is triggered, wherein at least one of the fourth smart contract or the fifth smart contract has a network function of a core network.

18. The method according to claim 17, wherein the method further comprises:
setting, by the deployment node of the fifth smart contract, the first subscription event.

19. The method according to claim 17 or 18, wherein a trigger condition of the first subscription event comprises: the fourth smart contract is updated, the fourth smart contract is canceled, the fourth smart contract is activated, or the fourth smart contract expires.

20. A smart contract-based communication method, wherein the method comprises:
monitoring, by a deployment node of a fourth smart contract, a second subscription event; and
sending, by the deployment node of the fourth smart contract, status information of the fourth smart contract to a deployment node of a fifth smart contract when the second subscription event is triggered, wherein the fifth smart contract subscribes to the fourth smart contract, and at least one of the fourth smart contract or the fifth smart contract has a network function of a core network.

21. The method according to claim 20, wherein the method further comprises:
setting, by the deployment node of the fourth smart contract, the second subscription event.

22. The method according to claim 21, wherein a trigger condition of the second subscription event comprises: the fourth smart contract is updated, the fourth smart contract is canceled, the fourth smart contract is activated, or the fourth smart contract expires.

23. A smart contract-based communication method, wherein the method comprises:
determining, by an execution node of a sixth smart contract, third invocation information, wherein the third invocation information is used to invoke a seventh smart contract, the third invocation information comprises first information, the first information is used to obtain access permission for the sixth smart contract to access the seventh smart contract, and at least one of the sixth smart contract or the seventh smart contract has a network function of a core network; and
sending, by the execution node of the sixth smart contract, the third invocation information.

24. The method according to claim 23, wherein
the first information comprises access permission information for the sixth smart contract to access the seventh smart contract; or
the first information comprises an identifier of a third blockchain, and access permission information for the sixth smart contract to access the seventh smart contract is stored in a node on the third blockchain.

25. The method according to claim 24, wherein the access permission information comprises at least one of the following: a validity time for the sixth smart contract to access the seventh smart contract, or access scope information for the sixth smart contract to access the seventh smart contract.

26. The method according to any one of claims 23 to 25, wherein the method further comprises:
sending, by the execution node of the sixth smart contract, fourth invocation information, wherein the fourth invocation information is used to invoke an eighth smart contract, and the eighth smart contract is used to determine the access permission for the sixth smart contract to access the seventh smart contract; and
receiving, by the execution node of the sixth smart contract, the first information.

27. The method according to claim 26, wherein the fourth invocation information comprises an identifier of the sixth smart contract and an identifier of the seventh smart contract.

28. The method according to claim 27, wherein the fourth invocation information further comprises at least one of the following: an identifier of a blockchain on which the sixth smart contract is located, information about a home location of the sixth smart contract, information about an access location of the sixth smart contract, or an identifier of a blockchain on which the seventh smart contract is located.

29. The method according to any one of claims 23 to 25, wherein the method further comprises:
sending, by the execution node of the sixth smart contract, a first request, wherein the first request is used to request the access permission for the sixth smart contract to access the seventh smart contract; and
receiving, by the execution node of the sixth smart contract, the first information.

30. A smart contract-based communication method, wherein the method comprises:
receiving fourth invocation information, wherein the fourth invocation information is used to invoke an eighth smart contract;
executing the eighth smart contract to obtain access permission information for a sixth smart contract to access a seventh smart contract, wherein at least one of the sixth smart contract, the seventh smart contract, or the eighth smart contract has a network function of a core network; and
sending first information, wherein the first information is used to obtain access permission for the sixth smart contract to access the seventh smart contract.

31. The method according to claim 30, wherein
the first information comprises the access permission information; or
the first information comprises an identifier of a third blockchain, and the access permission information is stored in a node on the third blockchain.

32. The method according to claim 30 or 31, wherein the access permission information comprises at least one of the following: a validity time for the sixth smart contract to access the seventh smart contract, or access scope information for the sixth smart contract to access the seventh smart contract.

33. The method according to any one of claims 30 to 32, wherein the method further comprises:
sending an execution result of the eighth smart contract to a node on a blockchain on which the eighth smart contract is located.

34. A smart contract-based communication method, wherein the method comprises:
receiving, by an execution node of a seventh smart contract, third invocation information, wherein the third invocation information is used to invoke the seventh smart contract, the third invocation information comprises first information, the first information is used to obtain access permission for the sixth smart contract to access the seventh smart contract, and at least one of the sixth smart contract or the seventh smart contract has a network function of a core network; and
determining, by the execution node of the seventh smart contract based on the third invocation information, whether to execute the seventh smart contract.

35. The method according to claim 34, wherein
the first information comprises access permission information for the sixth smart contract to access the seventh smart contract; or
the first information comprises an identifier of a third blockchain, and access permission information for the sixth smart contract to access the seventh smart contract is stored in the third blockchain.

36. The method according to claim 35, wherein the first information comprises the access permission information for the sixth smart contract to access the seventh smart contract; and
determining, by the execution node of the seventh smart contract based on the third invocation information, whether to execute the seventh smart contract comprises:
determining, by the execution node of the seventh smart contract based on the access permission information, whether to execute the seventh smart contract.

37. The method according to claim 35, wherein the first information comprises the identifier of the third blockchain; and
determining, by the execution node of the seventh smart contract based on the third invocation information, whether to execute the seventh smart contract comprises:
sending, by the execution node of the seventh smart contract, query information to a node on the third blockchain, wherein the query information is used to query the access permission for the sixth smart contract to access the seventh smart contract;
receiving, by the execution node of the seventh smart contract, a query result; and
determining, by the execution node of the seventh smart contract based on the query result, whether to execute the seventh smart contract.

38. The method according to any one of claims 1 to 37, wherein the network function of the core network is configured to provide at least one of the following services: a subscription service, an authentication service, a registration service, a mobility management service, a policy management service, a data processing service, a charging service, a session management service, a computing service, a sensing service, or an artificial intelligence service.

39. The method according to any one of claims 1 to 38, wherein the network function of the core network comprises at least one of the following: an access function, a mobility management function, a network repository function, unified data management, an authentication server function, a session management function, a user plane function, a policy control function, a network exposure function, a computing plane function, a data plane function, or a smart plane function.

40. A communication apparatus, comprising a module or an apparatus configured to perform the method according to any one of claims 1 to 10, or comprising a module or an apparatus configured to perform the method according to any one of claims 11 to 16, or comprising a module or an apparatus configured to perform the method according to any one of claims 17 to 19, or comprising a module or an apparatus configured to perform the method according to any one of claims 20 to 22, or comprising a module or an apparatus configured to perform the method according to any one of claims 23 to 29, or comprising a module or an apparatus configured to perform the method according to any one of claims 30 to 33, or comprising a module or an apparatus configured to perform the method according to any one of claims 34 to 39.

41. A communication apparatus, comprising a processor, wherein the processor is coupled to a memory, the memory is configured to store a program or instructions, and when the program or the instructions are executed by the processor, the apparatus is enabled to perform the method according to any one of claims 1 to 10, or perform the method according to any one of claims 11 to 16, or perform the method according to any one of claims 17 to 19, or perform the method according to any one of claims 20 to 22, or perform the method according to any one of claims 23 to 29, or perform the method according to any one of claims 30 to 33, or perform the method according to any one of claims 34 to 39.

42. A computer-readable storage medium, wherein the computer-readable storage medium stores a computer program or instructions, and when the computer program or the instructions are executed, a computer is enabled to perform the method according to any one of claims 1 to 10, or the method according to any one of claims 11 to 16, or the method according to any one of claims 17 to 19, or the method according to any one of claims 20 to 22, or the method according to any one of claims 23 to 29, or the method according to any one of claims 30 to 33, or the method according to any one of claims 34 to 39.

43. A computer program product, wherein the computer program product comprises computer program code, and when the computer program code is run on a computer, the computer is enabled to implement the method according to any one of claims 1 to 10, or the method according to any one of claims 11 to 16, or the method according to any one of claims 17 to 19, or the method according to any one of claims 20 to 22, or the method according to any one of claims 23 to 29, or the method according to any one of claims 30 to 33, or the method according to any one of claims 34 to 39.

44. A communication system, comprising an apparatus configured to perform the method according to any one of claims 1 to 10, and/or an apparatus configured to perform the method according to any one of claims 11 to 16.

45. A communication system, comprising an apparatus configured to perform the method according to any one of claims 23 to 29, and/or an apparatus configured to perform the method according to any one of claims 34 to 37.

46. The communication system according to claim 45, wherein the communication system further comprises an apparatus configured to perform the method according to any one of claims 30 to 33.
